# EUROPEAN PATENT SPECIFICATION

(11) **EP 4 180 211 B1**
(45) Date of publication and mention of the grant of the patent: **18.03.2026**
(21) Application number: 22215712.5
(22) Date of filing: 18.12.2019
(51) Int. Cl.: B29C 64/153, B22F 3/105, B29C 64/165, B29C 64/295, B29C 64/364, B33Y 30/00, B33Y 40/00, B29C 35/08, B22F 10/28, B22F 12/10

(54) **HEATER ARRANGEMENTS AND APPARATUS FOR LAYER-BY-LAYER FORMATION OF THREE-DIMENSIONAL OBJECTS**
HEIZVORRICHTUNGEN UND VORRICHTUNG ZUR SCHICHTWEISEN HERSTELLUNG DREIDIMENSIONALER OBJEKTE
AGENCEMENTS DE DISPOSITIF DE CHAUFFAGE ET APPAREIL POUR LA FORMATION COUCHE PAR COUCHE D'OBJETS TRIDIMENSIONNELS

(30) Priority: 19.12.2018 GB 201820759
(43) Date of publication of application: 17.05.2023
(62) Divisional of application: 19831812.3
(73) Proprietor: Stratasys Powder Production Ltd, Nottingham NG7 2RQ (GB)
(72) Inventor: DORINI, Gianluca, Nottingham NG7 2RQ / GB (GB)
(74) Representative: Pitchford, James Edward

(56) References cited:
- WO-A1-2006/125507
- DE-U1- 202009 012 628
- US-A1- 2011 165 340

## Description

### FIELD OF INVENTION

The present disclosure relates to overhead heater arrangements for an apparatus for layer-by-layer formation of three-dimensional (3D) objects from particulate matter, and to an apparatus for layer-by-layer formation of 3D objects having such a heater arrangement. The heater arrangements and apparatus may be particularly suitable for powder bed applications that require accurate control of the temperature of the build bed surface for consolidating the powder over specific locations of the powder bed.

### BACKGROUND

Applications used to make 3D objects from particulate matter, such as laser sintering or high speed sintering, are receiving increased interest as they move towards faster throughput times and become industrially viable. Such processes apply heat to successively precondition and consolidate, or sinter, surface powder material that is spread layer by layer on a build bed surface. Control of the powder surface is important for a variety of reasons, such as ensuring controlled temperature conditions across the powder bed, and from layer to layer, so as to avoid undesirable sintering conditions, such as "curl" where sintered material warps upwards from the build surface and causes warp in the final product as the build cake cools down. Specifically, for an industrial process it is essential that reliability of the build process and repeatability in properties and shape of an object are ensured, regardless of where on the build bed and in what orientation it is being built. At the simplest level, where identical objects are made in a series of builds, repeatability of objects needs to be ensured. Where a plurality of identical objects are to be made in a build, the objects need to be aligned with respect to one another within the same plane of the build bed surface. Higher complexity occurs where identical objects are located at different locations within a build bed as well as over different planes of the build bed in relation to one another. This poses new challenges in ensuring local control of the temperature profile and an adaptable heater that allows static as well as dynamic elements of control of the temperature profile at the build surface.

In high speed sintering for example, where typically radiant overhead heaters (ceramic heaters and/or infrared lamps) arranged above the build bed surface pre-heat the surface of a powder bed on which the object is to be formed, infrared absorber is deposited over locations on the powder bed that are to be sintered. After that, an infrared sintering lamp is passed across the build bed surface to heat the infrared absorber and thus sinter the powder that includes the absorber. The infrared radiation from the sintering lamp imparts an intense burst of energy to the powder that dissipates over time to the cooler regions of the build bed and alters the temperature distribution across the build bed surface.

The overhead heaters may further, or instead, be used to provide a degree of control over the temperature profile at the build bed surface, so that the temperature difference between sintering temperature and build bed temperature remains even across the build bed surface.

In certain situations, a build may be arranged with some layers containing parts concentrated in a certain area of the bed, for example towards one of the corners. In this situation the area of the bed in which objects are being made will become hotter than other areas of the bed. To hold an even temperature of powder across all areas of the bed, additional heat is required in areas where objects are not located.

Typically the overhead heaters are constituted by a plurality of ceramic tile heaters arranged over an area that spans the build bed surface underneath. They may be controlled individually to crudely affect the build bed temperature over their own area of influence by temporarily switching them off; however in industrial applications that require finer and rapid control this approach does not provide sufficiently accurate temperature control. Furthermore, other parts of the printer located within the working space but beyond the build bed surface - for example carriages, when parked or waiting to one side of the build bed surface, supporting the powder distributors (e.g. rollers), infrared lamps, inkjet printheads depositing radiation-absorbing fluid, or other structures that easily absorb and retain heat - require to be shielded from the overhead heaters to prevent them from failing or contributing undesirably to the overall rise in temperature of the working space. For this reason, reflective shield surfaces are conventionally provided that shield the sides of the working space beyond the build bed surface from the radiation of the overhead heaters and that redirect the radiation from the overhead heaters onto the build bed surface.

In the following, the 'working space' is intended to represent the space between the plane of the heater arrangement and plane of the build bed surface, and within which powder is dosed to the working surface from a powder dosing device, and within which one or more carriages move, whilst the 'working surface' is the surface across which the carriages move and to which the powder is dosed from the powder dosing device. The 'build bed' is the volume of powder supporting the object, and the 'build bed surface' is the uppermost surface of the build bed during any time of the build process. During layer-by-layer formation of the object, the 'surface' is therefore presented by the new surface of each successive layer.

The quality of the object that is being formed is to a significant extent determined by control of the temperature distribution across the build bed surface so as to provide reliable integrity between layers and to prevent distortion due to temperature gradients. Improved control of the heaters is therefore a necessity to allow the industrial application of the formation of three-dimensional objects using powder bed based processes.

Background art is provided in US 2011/165340 A1, which discloses a device for generatively manufacturing a three-dimensional object, the device comprising: a frame, an upper portion thereof surrounding a building field; a support which is arranged in the frame and vertically movable at least below the building field by lift mechanics; a radiation device which generates an energetic beam which is focused to arbitrary points in the building field by a deflection means, so as to selectively sinter or melt a powdery material which is present in the building field; a coater for applying a layer of a powdery material onto the support or a previously applied layer of the powdery material; a housing, in which at least the frame and the support are arranged and which surrounds a building space; and a heating device which continuously supplies heat at least to the building field environment or the building space thereabove.

### SUMMARY

The present invention provides apparatus for layer-by-layer formation of a three-dimensional object by the consolidation of particulate matter, as defined in Claim 1 of the appended claims. Details of particular embodiments are set out in the appended dependent claims.

Spatial separation of the radiative heating elements reduces the area of overlap of the areas of influence of neighbouring elements, which reduces the energy density on the build bed surface in the areas of overlap. Careful choice of spacing can improve the uniformity of the combined thermal area of influence between neighbouring elements. In addition, this may allow a wider range of temperature control since the overall heating effect on the build bed surface is reduced.

By ensuring that the shrouds have surfaces that are infrared absorbing surfaces, infrared radiation is not reflected and focussed to areas of the build bed surface where it cannot be controlled, and hot spots on the build bed surface may be avoided. Furthermore, the shrouds may be designed so as to provide a uniform temperature profile over the build bed surface.

According to the present invention, no reflective shields are required to shield components within the working space from the heater arrangement. The presence of reflective shields would counteract the benefits of the invention.

### BRIEF DESCRIPTION OF THE DRAWINGS

Reference is now directed to the drawings, in which:
Figure 1 is a schematic cross-sectional side view of an apparatus for layer-by-layer formation of three-dimensional objects, having a known heater arrangement;
Figure 2A is a schematic plan view of a known heater arrangement, shown for comparison purposes;
Figure 2B is a schematic view of section A-A' of the heater arrangement of Figure 2A;
Figure 2C is the temperature profile achieved with the heater arrangement of Figure 2A;
Figure 2D is an illustration of reflection of radiation due to the common shroud of Figure 2A;
Figure 3 is a schematic cross-sectional side view of an apparatus for layer-by-layer formation of three-dimensional objects, having a heater arrangement according to an embodiment of the present invention;
Figure 4A is a schematic plan view of a heater arrangement according to a first example not according to the claimed invention, superimposed with the simulated temperature profile on the build bed surface;
Figure 4B is a schematic plan view of a further heater arrangement according to a variant of the first example not according to the claimed invention, superimposed with the simulated temperature profile on the build bed surface;
Figure 5 is a schematic plan view of a heater arrangement having two bare heating elements, superimposed with the simulated temperature profile on the build bed surface;
Figure 6 is a schematic plan view of a heater arrangement having two shrouded heating elements, superimposed with the simulated temperature profile on the build bed surface;
Figure 7A illustrates radiation emerging from a heating element having an exemplary radiation-absorbing shroud with two passages;
Figure 7B illustrates radiation emerging from a heating element having another exemplary radiation-absorbing shroud with four passages;
Figure 7C illustrates radiation emerging from four shrouded heating element having a radiation-absorbing shroud each with two passages;
Figure 8A is a simulation of temperature response at the build bed surface from a bare (R=∞) heating element;
Figures 8B-8D are simulations of temperature response at the build bed surface from various shrouded (R=0.5-2.0) heating elements;
Figure 9A is a schematic plan view of a heater arrangement not according to the claimed invention having shrouded heating elements (R=2.5), superimposed with the simulated temperature profile on the build bed surface;
Figure 9B is a schematic plan view of another heater arrangement not according to the claimed invention having shrouded heating elements (R=0.8), superimposed with the simulated temperature profile on the build bed surface;
Figure 10 is a schematic plan view of a mixed heater arrangement having bare and shrouded heating elements, superimposed with the simulated temperature profile on the build bed surface;
Figure 11 is a schematic plan view of another mixed heater arrangement having bare and shrouded heating elements, superimposed with the simulated temperature profile on the build bed surface;
Figure 12 illustrates radiation emerging from a shrouded heating element for which the solid angle is tilted with respect to the perpendicular to the build bed surface;
Figures 13A and 13B are simulations of temperature response at the build bed surface from a heating element having a shroud of varying R-value;
Figure 14A to 15B show plan views and section views A-A' of implementations of a shroud with varying cut-off properties;
Figure 16A is a schematic plan view of a further mixed heater arrangement having bare and shrouded heating elements;
Figure 16B illustrates the effect of each heating element in turn of the heating elements of Figure 16A;
Figure 17A is a schematic plan view of a yet further mixed heater arrangement not according to the claimed invention having bare and shrouded heating elements;
Figure 17B is the temperature profile achieved with the heater arrangement of Figure 17A; and
Figure 18 illustrates a heater arrangement not according to the claimed invention having bare heating elements beyond and around a printable area.

In the Figures, like elements are indicated by like reference numerals throughout.

### DETAILED DESCRIPTION

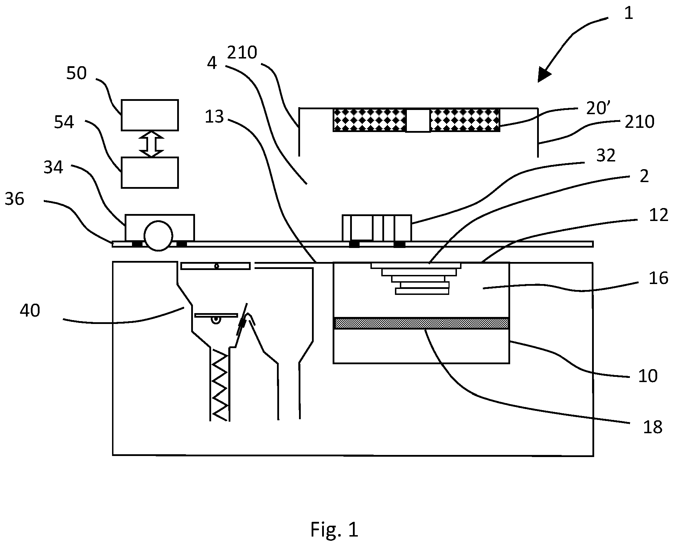

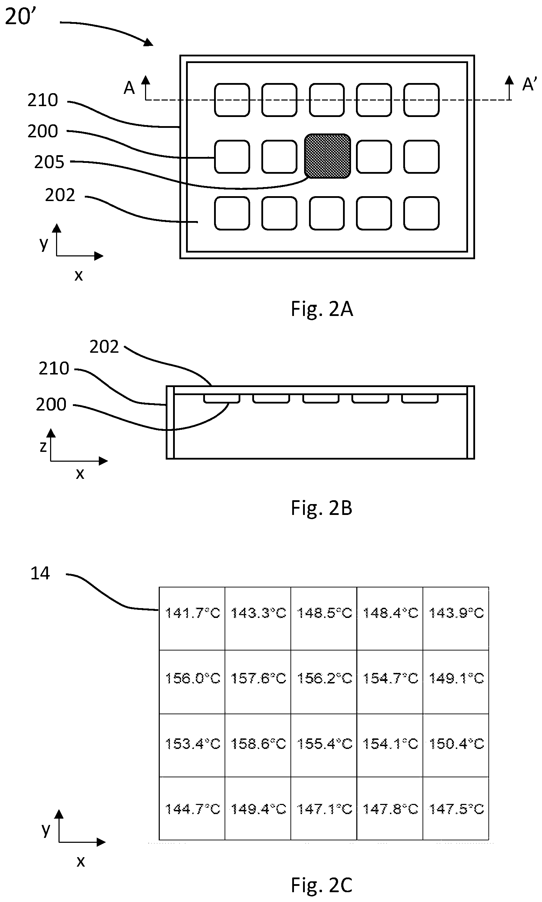

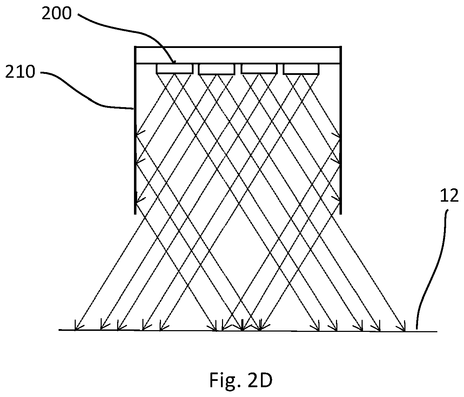

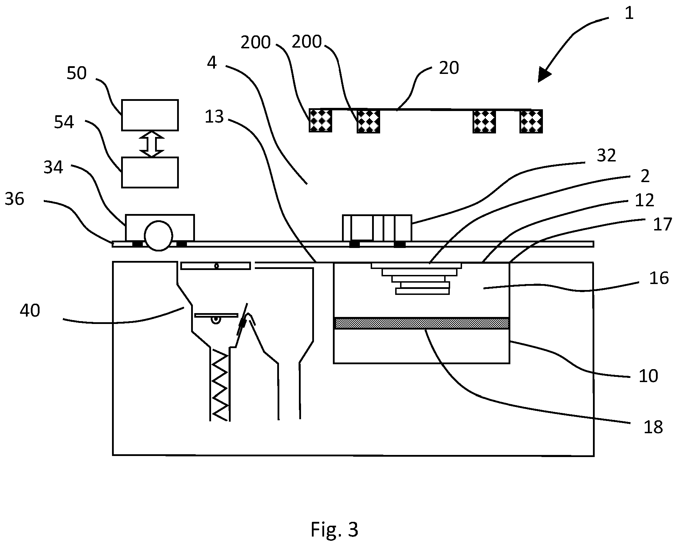

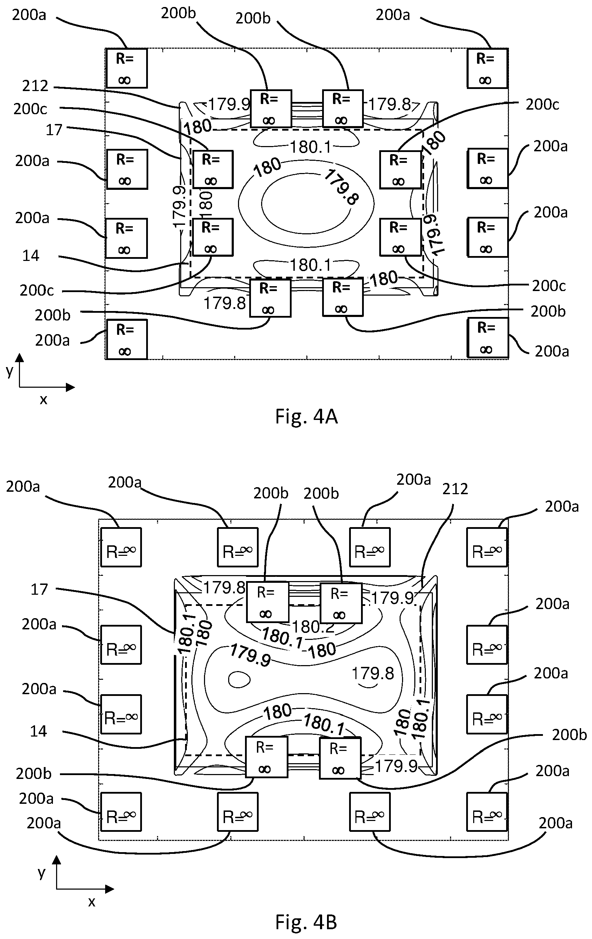

To highlight the functionality of the embodiments and their various implementations that will be described with respect to Figures 3-18, reference is initially made to a known apparatus and heater arrangement in Figures 1 and 2. The embodiments of figures 4A, 4B, 9A, 9B, 17A, 17B and 18 are not part of the claimed invention.

Figure 1 shows an apparatus 1 for layer-by-layer formation of three-dimensional objects by the consolidation of particulate matter. The apparatus 1 has a working space 4 in which a sled system comprising sleds 32 and 34, a known overhead heater 20' having a common protective shroud 210, and a build bed 16 are arranged. The build bed 16 has a build bed surface 12, which is comprised in a work surface 13 onto which powder is dosed from a dosing system 40 and over which successive layers of dosed powder are spread to form an object 2.

The build bed 16 and the formed object 2 are supported inside a build chamber 10, in which a build bed 16 supported by a piston 18 is movable in the vertical direction. The piston lowers the build bed 16 by a layer height each time a layer build is completed. Moveable across the build bed surface are modules supporting powder spreading and processing equipment, in this case comprised within two carriages, or sleds. One sled is a printing sled 32 supporting one or more droplet deposition heads and a radiative (e.g. infrared) lamp, and the other sled is a powder distribution sled 34 comprising a powder spreader, for example a roller. Each sled is moveable on a rail 36 across the build bed surface. The powder dosing system 40 doses powder to the build bed surface so that it can be spread by the powder distribution sled 34. Once a layer of powder has been spread over the build bed surface 12 by the powder distribution sled 34, the printing sled 32 moves across the layer to deposit radiation-absorbent material (RAM) in a carrier fluid, and a radiative lamp (e.g. infrared lamp) mounted on the printing sled 32 is used to irradiate the powder so as to consolidate the areas onto which RAM has been deposited. Next, the piston 18 lowers the build bed 16 by a layer thickness, and the process is repeated until the object is fully built.

The build process for forming an object of high quality requires control over the temperature of the build bed surface, which will now be described in detail.

First, the known heater arrangement 20' will be described. Figure 2A shows a plan view and Figure 2B a side view of a conventional overhead heater 20' when viewed from the direction of the build bed surface. Individual heating elements 200 are arranged in a regular n by m matrix on a frame 202 to cover the area above the build bed surface, where n represents the number of columns in a direction x and m the number of rows in a direction y orthogonal to x. In this case, there are five columns and three rows of heating elements representing a 5 by 3 matrix. The position of each heater 200 on the frame may be represented by an (n; m) coordinate. The central location at (2; 3) is occupied by a thermal camera 205 that monitors the temperature of the build bed surface. There are therefore 14 heating elements 200 in this known heater arrangement 20'. The heating elements are for example ceramic tiles that emit infrared radiation. The heating elements are placed at a distance of about 30 cm above the build bed surface, and are surrounded by a common protective shroud 210. The shroud presents a common reflective wall around the matrix of heating elements and extends a distance towards the build bed surface, so that it prevents some of the radiation from the heating elements reaching other parts of the working space that are arranged beyond the perimeter of the build bed surface. It has been found that while the shroud protects other parts of the working space, it also has a surprisingly undesirable effect on the temperature profile of the build bed surface.

The temperature profile typically created by the heater arrangement 20' is shown in Figure 2C, as measured by the thermal camera 205. In the following, the temperature response is the effect of the heater arrangement on the build bed surface. This results in a temperature profile, which represents the temperature distribution across the build bed surface. For the purpose of this measurement, the printable area 14 located within the build bed perimeter 17 is theoretically divided into a 4 by 5 matrix of sectors, and the average temperature for each sector is obtained. It can be seen that the average temperature between sectors ranges from a low of about 142°C for one of the corner sectors to a high of 159°C for one of the central sectors; the temperature distribution expressed in terms of standard deviation between the sectors is 4.9°C. In addition, the temperature profile is not symmetric across the centre lines of the matrix; this may be due to external factors or variations in the thermal dissipation path to the exterior of the build bed.

Overall, the temperature is higher near the centre of the build bed surface, and the corner sectors are at the lowest temperatures. This is caused by the reflective surface of the shroud. For a single heater element without a reflective shroud, the temperature profile may be thought of as the projection of a solid angle onto the build bed surface, with energy density highest in the centre of the cone and lowest toward the perimeter of the cone. The intersection of the cone with the build bed surface defines the 'area of influence' of the heater element. It may be mapped in a contour plot showing, for example, lines of 70% or more of the cone's peak response at the build bed surface. The presence of the reflective shroud alters the area of influence by reflecting any radiation towards the centre of the build bed surface, so that the centre receives additional radiation. The reflection and creation of 'hot spots' is illustrated in a simple ray diagram in Figure 2D. While the infrared radiation, indicated by dotted arrows, from the heating elements 200 is prevented from spreading far outside the common shroud 210, the reflection of radiation from the walls of the shroud lead to redirection of radiation towards the centre of the build bed surface 12 underneath the shroud. The area of influence of any heater elements arranged near the outer heater element matrix is particularly strongly modified. Therefore, the cooler corner sectors cannot be adjusted by increasing the power of the heater element above them; this will contribute further to the heating of the central region and increase the temperature difference even further.

A different approach to managing the temperature of the build bed surface is therefore needed, and embodiments of such an approach will now be described.

Figure 3 shows an apparatus 1 for layer-by-layer formation of three-dimensional objects by the consolidation of particulate matter, according to an embodiment of the present invention. The apparatus 1 has a working space 4 in which a sled system comprising sleds 32 and 34, an overhead heater 20 that does not have a common protective shroud, and a build bed 16 are arranged. The build bed 16 has a build bed surface 12, which is comprised in a work surface 13 onto which powder is dosed from a dosing system 40 and over which successive layers of dosed powder are spread to form an object 2. The build process for forming an object is as described above in relation to Figure 1.

In a first example, an apparatus is provided for layer-by-layer formation of a three-dimensional object by the consolidation of particulate matter. The apparatus has a working space with opposing bottom and top sides, a build bed surface located on the bottom side of the working space and upon which successive layers of the object are formed, and a heater arrangement arranged on the top side of the working space having a heater arrangement area and comprising a plurality of spaced-apart radiative heating elements arranged across the heater arrangement area. The radiative heating elements are operable to heat particulate matter at the build bed surface to a desired temperature profile. The plurality of heating elements comprises a first group of one or more heating elements, wherein, as viewed from said top side of the working space, the first group of one or more heating elements is arranged beyond and around the perimeter of the build bed surface and within the perimeter of the heater arrangement area comprising the perimeter of the build bed surface. By 'spaced-apart' is meant that the heating elements do not touch one another but instead a gap exists between them. The gap may be 10% of the width of a heating element, or it may be more, for example at least 50% as will be seen in the implementations of Figures 4A and 4B and Figures 10 and 11.

For example, the first group comprises heating elements that are not shrouded heating elements provided with a radiation restricting shroud to modify the radiation emitted from the heating element. Such heating elements may also be referred to as 'bare' heating elements. In the following, 'bare' heating elements are also indicated by 'R=∞', which will be explained further below.

Turning now to a second example, a heater arrangement for an apparatus for layer-by-layer formation of a three-dimensional object by the consolidation of particulate matter is provided. The heater arrangement comprises one or more shrouded radiative heating elements, arranged over the heater arrangement area, the shrouded radiative heating elements being operable to heat particulate matter at a build bed surface of said apparatus to a desired temperature profile; and one or more radiation-absorbing shrouds, which are arranged in communication with the shrouded radiative heating elements, and each of which form one or more radiation-absorbing passages for restricting the solid angle over which radiation is emitted by the shrouded radiative elements. Each radiation-absorbing passage has a first end, which opens towards at least one of said shrouded radiative heating elements and a second end which opens to the exterior. The exterior is the space outside of the radiation-absorbing shroud, opening to the end of the shroud opposite to that facing the heating element.

Furthermore, an apparatus for layer-by-layer formation of a three-dimensional object by the consolidation of particulate matter comprising such a heater arrangement is provided, wherein the apparatus comprises a working space having opposing bottom and top sides, and a build bed surface arranged on said bottom side of the working space and upon which successive layers of said object are arranged to be formed.

It will now be shown how any of the present embodiments (and variants thereof) may be used to provide an improved control of the temperature profile at the build bed surface.

### Heater layouts without meshes/shrouds

With respect to the first example, Figures 4A and 4B schematically illustrate two example implementations not according to the claimed invention of arrangements 20 with bare heating elements that are considered "optimised" arrangements compared to known arrangements. Superimposed onto the arrangements is the resulting temperature profile of the build bed surface. In the Figures, the location of the heating elements 200 supported on a top side of the working space 4 is shown as vertically projected onto the surface 12 of the build bed 16 underneath. The build bed surface has a perimeter 17. The heating elements 200 in these implementations are bare heating elements ("R=∞").

The expression 'vertically projected onto the build bed surface' is meant to represent a view through the heating element arrangement from the top side of the working space and onto the work surface comprising the build bed surface. The projected area may extend beyond the build bed surface, for example as shown in Figure 3. This superposition of heating element arrangement onto the work surface allows a convenient visualisation of the arrangement of heating elements with respect to the build bed surface and surrounding surface beyond it.

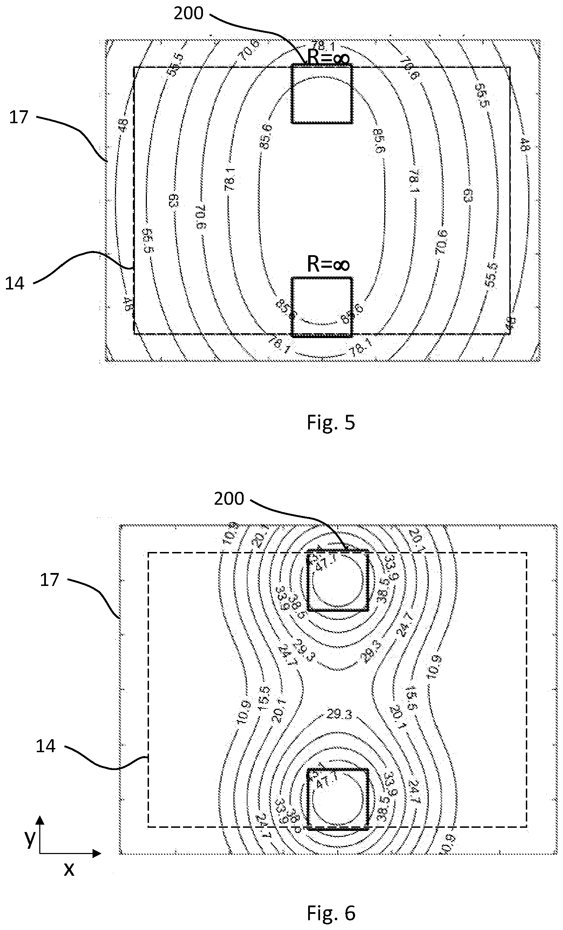

Note that in contrast to Figures 1 and 2, the arrangements and simulations of Figure 4A and 4B (as well as Figures 5-18) comprise or consider no common protective shroud that shields parts of the work space from radiation. The perimeter of the printable area 14 within the build bed surface 17 is indicated by a dashed line. The heating elements 200 are arranged generally in relation to the shape of the build bed surface, which in this case is of a rectangular shape.

In the implementations of Figures 4, 5 and 10-11, the heating elements 200 of arrangement 20 are located at a distance of 30 cm above the build bed surface. They are of identical size of 55 mm x 55 mm and operated at a suitable duty cycle each so as to provide a temperature profile as close to the target temperature of 180°C at the build bed surface. The dimensions of the rectangular area encompassed in Figures 4A and 4B is 560 mm by 460 mm, and the area covered by the heating elements represents the total area of the heating element arrangement

(i.e. it is the same as the area encompassed in Figure 4A, while it is slightly smaller in Figure 4B). A simulation of the temperature profile on the build bed surface resulting from each arrangement is illustrated by isothermal contour lines 212.

To simulate the temperature profile at the build bed surface to generate an isothermal contour map as shown in Figures 4A-4B (as well as Figures 5, 6 and 9-11), a predetermined 'area of influence', or radiative footprint, is considered for each heating element. The 'area of influence' of a heating element is the extent of the heating impact the radiative power of the element is considered to have on the build bed surface. In the arrangements provided, the area of influence for each heating element represents 70% of the peak power of its radiation received at the build bed surface. The percentage of peak power is chosen to be suitably relevant to the assessment of the heating element's effect on the build bed surface, and is based on the temperature response curve obtained by the normalised simulated steady state temperature profile. Too large a percentage (e.g. >90%) would potentially capture areas outside of the printable area and/or build bed surface and lead to averaging out over too large an area of which a significant amount plays no significant role; too small a percentage (e.g. <50%) would ignore significant heating effects of the element over neighbouring areas. A similar representation may be chosen for the combined area of influence of all heating elements.

In the contour maps, or temperature profiles, shown, contour lines represent constant temperature (isothermal) lines on the build bed surface as result of a simulation of temperature profile, where the simulation takes into account the area of influence of each heating element.

Furthermore, although not essential to demonstrate the effect of arrangement according to the present embodiments, the contour maps of the optimised arrangements were arrived at by applying an individual duty cycle to each heating element that allows the arrangement to most closely achieve the target temperature. The duty cycle of a heating element is the percentage over which the heating element is switched ON over a cycle of predetermined duration τ. A duty cycle of 0% means the element is switched OFF for the whole duration τ of the cycle; a duty cycle of 50% means it is switched ON for 50% of the duration τ, and 100% means it is continuously ON for the duration.

These conditions apply to all subsequent Figures of the same type (Figures 5, 6 and 9-11).

Regarding Figure 4A, sixteen bare heating elements 200 of arrangement 20 are arranged above the build bed surface, indicated by the build bed perimeter 17, and part of the surrounding working surface. A first group of eight of the heating elements 200a is arranged beyond and around the (projected) perimeter of the build bed 17. In this implementation, it can be seen from the Figure that the elements are of identical dimensions and type. The elements are physically spaced apart from one another by over 50% of an element width or more. An optimised spacing may depend on the distance between the arrangement 20 and build bed surface.

In the implementation of Figures 4A and 4B, the build bed surface is of a rectangular shape having a primary axis and a secondary axis; and the radiative heating elements are arranged in a pattern that is symmetric about the primary axis and the secondary axis. Furthermore the primary axis of the build bed surface is longer than the secondary axis of the build bed surface, since the build bed surface is of a rectangular shape.

Of the eight bare heating elements 200a of the first group of Figure 4A, four heating elements each are located at a distance away from short, or secondary, sides (along the y direction) of the rectangular shaped build bed surface, leaving a gap roughly the size of a heating element between the inner edge of the heating elements and the perimeter 17 of the build bed surface. The first group of heating elements in some implementations may therefore consist of bare heating elements arranged along the secondary axis of the build bed surface.

A second group of spaced-apart heating elements comprises four heating elements 200b that are arranged along the primary sides (x direction) of the build bed surface across the perimeter 17 of the build bed surface, but just outside the perimeter of the printable area 14 (two each along the primary sides of the printable area). The second group of bare heating elements is therefore arranged beyond and around the perimeter of the printable area. Additionally, the second group of heating elements may consist of bare heating elements as shown in Figure 4A, and may further be arranged in a direction parallel to the secondary axis of the build bed surface. The elements of the second group of Figure 4A are of identical dimensions and type and are physically spaced apart from one another by over 50% of an element width or more.

An optimised spacing may depend on the distance between the arrangement 20 and build bed surface.

The first group of heating elements is arranged beyond and around the (projected) perimeter of the build bed 17, where 'beyond' means outside, or outside and immediately adjacent the perimeter, but in either case not crossing the perimeter so as to partially fall within the build bed surface. A similar meaning of 'around and beyond' is intended where it applies to the perimeter of the printable area.

In the implementation of the heater arrangement 20 of Figure 4A, apart from the first and second group of spaced-apart heating elements, a further group of four spaced-apart heating elements 200c is provided, the heating elements 200c being arranged along the short (or secondary) sides of and just inside the perimeter of the printable area 14. The elements of the third group of Figure 4A are of identical dimensions and type and are physically spaced apart from one another by over 50% of an element width or more. An optimised spacing may depend on the distance between the arrangement 20 and build bed surface.

The simulation of the profile of the arrangement of the Figure 4A to provide a target temperature of 180°C predicts a standard deviation of 0.14°C from the target.

An alternative arrangement achieving a similarly well controlled temperature profile at the build bed surface is shown in Figure 4B. In a variant of the first example, a first group of spaced-apart bare heating elements 200a is arranged beyond and around the perimeter of the build bed surface 17, but in this case all heating elements are located at a distance away from the perimeter along both the x and y direction. There are twelve heating elements 200a in the first group, spaced roughly evenly around the perimeter of the build bed surface. As in the implementation of Figure 4A, the build bed surface is of a rectangular shape, having a primary and a secondary axis. The radiative heating elements are arranged in a pattern that is symmetric about the primary axis and the secondary axis. The bare elements of the first group as shown in Figure 4B are of identical dimensions and type and are physically spaced apart from one another by over 50%, or over 100%, of an element width or more. An optimised spacing may depend on the distance between the arrangement 20 and build bed surface.

Apart from the first group, a further group of four spaced-apart heating elements 200b is positioned across the long, or primary, sides (along the x direction) of the perimeter 17 of the build bed surface and of the perimeter 14 of the printable area. The bare elements of the second group as shown in Figure 4B are of identical dimensions and type and are physically spaced apart from one another by over 50%, or over 100%, of an element width or more. An optimised spacing may depend on the distance between the arrangement 20 and build bed surface.

This optimised arrangement predicts a temperature distribution with a standard deviation of 0.15°C from a target 180°C.

Compared to the measured temperature of the build bed surface presented in Figure 2C therefore for the standard bare heater element arrangement provided with a common protective shroud, where the standard deviation from the target temperature of 180°C between sectors is significantly higher (4.9°C), it can be seen that optimised arrangements can achieve a significantly improved control over the temperature of the build bed surface. 'Optimised' arrangement means that the location of the heating elements has been adjusted to provide an improved temperature profile with a reduced temperature distribution from the intended target temperature compared to an initial, non-optimised arrangement.

It is thought that spatial separation of the elements reduces the area of overlap of the areas of influence of neighbouring elements, which reduces the energy density on the build bed surface in the areas of overlap and reduces the occurrence of hot spots. Careful choice of spacing can improve the uniformity of the combined thermal area of influence between neighbouring elements. In addition, this may allow a wider range of temperature control since the overall heating effect on the build bed surface is reduced.

The implementations of Figures 4A and 4B both show that by arranging a group of one or more heating elements beyond and around the perimeter of the build bed surface, in absence of a protective shroud, the temperature profile at the build bed surface can be adequately controlled to below 0.2 C deviation from the target temperature. In addition, the temperature profile is not focussed on other areas within the working space and a protective shroud is not needed.

Both implementations further illustrate that by arranging a group of spaced-apart heating elements beyond and around the perimeter of the build bed surface, the temperature control across the build bed surface is improved, for example by locking in the heat generated by the sintering steps. This heat would otherwise dissipate to the outer, cooler, regions of the work surface. Since this prevents a large temperature differential between the printable area and the perimeter of the build bed surface, the heat by the infrared sintering lamps is prevented from escaping the build bed and temperature fluctuations are significantly reduced.

The first group of heating elements arranged beyond and around the perimeter of the build bed surface may consist of bare heating elements as shown in Figures 4A and 4B.

In the examples shown in Figures 4A and 4B, the first group comprises an even number of at least two radiative heating elements.

Additionally, or alternatively, in some implementations of optimised heater arrangements such as in the implementations of Figures 4A and 4B, the first group may comprise one or more bare heating elements.

Optionally, in some implementations of optimised heater arrangements, the plurality of heating elements of the heater arrangement may be constituted by the first and second group of heating elements. Additionally, or instead, the first and second group of heating elements of the plurality of heating elements may consist of bare heating elements.

In implementations such as those shown in Figures 4A and 4B, where the build bed surface and the heater arrangement are of rectangular shapes having a primary and secondary axis, the dimension of the build bed surface 12, along the primary axis of the build bed surface, is around 60% or less of the dimension of the heater arrangement, along the primary axis of the build bed surface and of the heater arrangement area, where the primary axis of the heater arrangement area is substantially parallel to, or substantially coincides with, the primary axis of the build bed surface. The dimension of the heater arrangement 20 is determined by the extent of the rectangular area covered by the plurality of heating elements.

### Heater layouts with shrouds/meshes

Turning now to the second example, optimised arrangements of heating elements will now be described that allow improved control of the temperature profile at the build bed surface.

Figure 6 is a plan view of a schematic of two shrouded heating elements 200 located above the build bed surface with a perimeter 17 and a printable area perimeter 14. Each shrouded heating element 200 has a radiation-absorbing shroud. For comparison purposes, the locations of the heating elements 200 correspond to the matrix positions (1; 3) and (3; 3) of the 5 by 3 matrix of heating elements of Figure 2A; however, there is no common protective shroud in this case.

The shroud of each shrouded heating element in Figure 6 is a thin-walled square section forming a hollow passage that is open at both ends. A first end opens towards the bottom of the working space, and a second end is directed towards the top of the working space and opens towards the heating element.

The dimensions of the shroud in this example are (x, y, z) = (23.33 mm, 23.33 mm, 28 mm). For a square section shroud as this, the passage may be represented by the ratio of x/z, or width/depth, which will here for simplicity be referred to as 'R-value'. For the shrouded elements 200 of Figure 6 therefore, the passages of the shroud can be described by R=0.8.

The interior walls of the passages have for example black surfaces and present cut-off elements to the emerging radiation. A cut-off element causes radiation to be absorbed when it meets an internal surface of the shroud wall, rather than being reflected and re-directed. Furthermore, the spread of the solid angle of infrared radiation emerging from the cut-off element is restricted. The infrared absorbing surfaces of the passages prevents internal reflection and creation of unwanted focussing effects causing hotspots on the build bed surface, similar to those created by the shields of known apparatus. The shrouds of the shrouded cut-off elements according to the present disclosure will be referred to as "radiation-absorbing shrouds".

Figure 6 further shows, in plan view, the perimeter 17 of the build bed surface as being the outer circumference of the Figure, and the perimeter of the printable area 14, as a hashed line. Contour lines of temperature illustrate the temperature profile at the build bed surface with the heating elements in operation and located at a distance of 30 cm above the build bed surface.

In this example, the target temperature was the same as for Figure 5. The heating elements are identical and of the same size and operated under the same conditions, at the same duty cycle. It can be seen that the temperature is highest directly beneath the heating elements, reaching almost 48°C, and quickly tails off to about 10°C within about another heating element spacing away. Meanwhile the central area of the build bed surface reaches about 30°C. If, by comparison, the shrouded heating elements were replaced by bare heating elements in the same positions (3; 1) and (3; 3), a temperature profile shown in Figure 5 is to be expected from the simulation. The temperature profile due to the two shrouded heating elements 200 of Figure 6 is almost half that of the bare heating elements of Figure 5, illustrating the radiation-restricting effect of the radiation-absorbing shrouds of Figure 6. This illustrates the radiation limiting effect of the passages of shrouded elements both in spread on the build bed surface as well as in peak intensity. This will be described in more detail next.

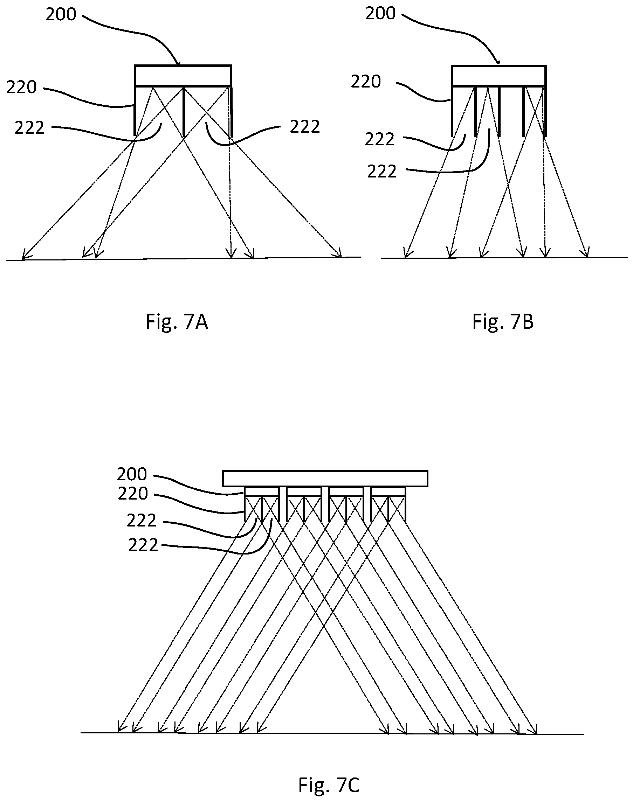

This effect of the 'shroud' is illustrated further in Figures 7A-7C. Figure 7A shows a two-dimensional illustration of heating element 200 with a shroud 220 having two passages 222 along the x-direction. Dashed lines indicate radiation originating at various points from the surface of the heating elements 200 and emerging from the passages 222. Figure 7B shows a similar arrangement but having four passages over the same size heating element 200. The depth (in the z-direction) of the passages remains the same, but the pitch (in the x-direction) is much tighter. It can be seen that as a result, the spread of the radiation on the build bed surface below beyond the extent of the shroud is much more restricted compared to Figure 7A. Figure 7C illustrates the effect of the shrouded heating element of Figure 7A in a row of shrouded heating elements 200, having shrouds 220 with two passages 222 along the x-direction each. It can be seen how the shrouded row of heating elements provides for a very different effect on the build bed surface compared to the arrangement 20' of Figure 2D, where the radiation becomes concentrated towards the centre of the build bed surface. Instead, radiation may be evenly spread away from the centre of the build bed surface using the shrouded heating elements in Figure 7C.

Figures 7A-7C therefore illustrate how the direction of spread (solid angle) of the radiation may be controlled using a shrouded heating element and by varying the pitch of the passages. More generally, control is provided by the specific design of the passages, as will be explained in more detail later.

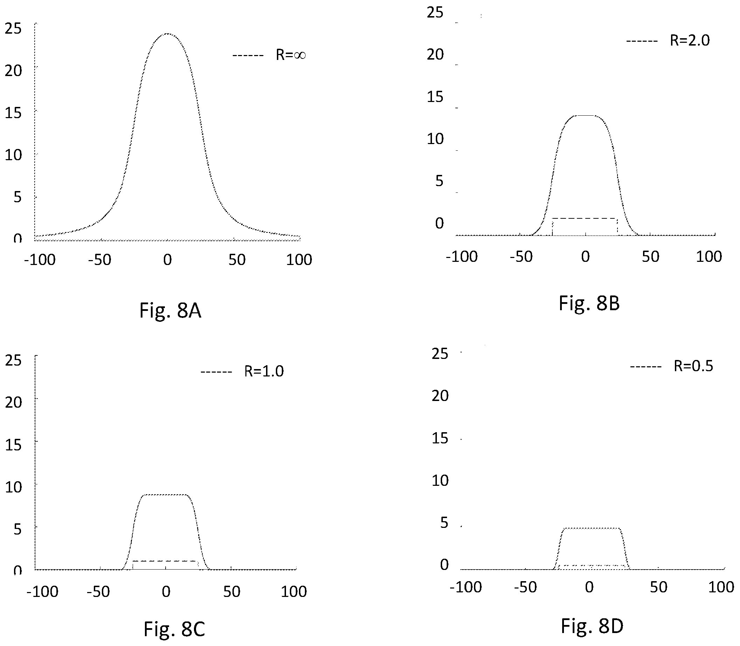

In addition to controlling the direction of the radiation of the heating elements, the shroud also modifies the total energy received at the build bed surface. This is illustrated in Figures 8A-8D.

Figures 8A-8D plot the simulation results of temperature response (solid curve) in 2 dimensions along the build bed surface underneath heating elements bearing shrouds of hypothetical R-values. The heating elements having a length of 50 mm were placed 10 cm above the build bed surface. The dashed lines represent the R-value against distance across the heating element.

For R=∞ in Figure 8A, the temperature response resembles a Gaussian curve with a broad tail-off across 20 cm of the build bed surface. Figure 8B with R=2 starts to show a significant drop in peak response and a sharper tail-off in temperature, spanning less than half the distance of the response curve of the heater element without shroud. In addition, a flattening of the central response region can be observed. This flattening of the central response region progresses for even smaller R-values of R=1.0 and R=0.5 in Figs. 8C and 8D.

For Figure 8D, the central response section of the curve is flat over almost the entire footprint of the heating element above the build bed surface but at the expense of losing around 75% of the peak response.

From Figures 8A-8D, it can therefore be seen how a decreasing R value progressively restricts the area of influence of the heating element, while also reducing its peak response at the build bed surface.

Restricting the peak response may be useful for creating a flat temperature profile for areas of the build bed surface that are circumstantially hotter than other areas, due to, for example, a variation in heat absorbing mass nearby, or hotter regions being created for a specific object that is being formed, for example as a consequence of large/dense cross sections/volume parts are being built, and/or where sintering radiation is applied repeatedly during successive layering steps over the same area and the heat cannot dissipate quickly enough to balance the temperature profile before the next cycle.

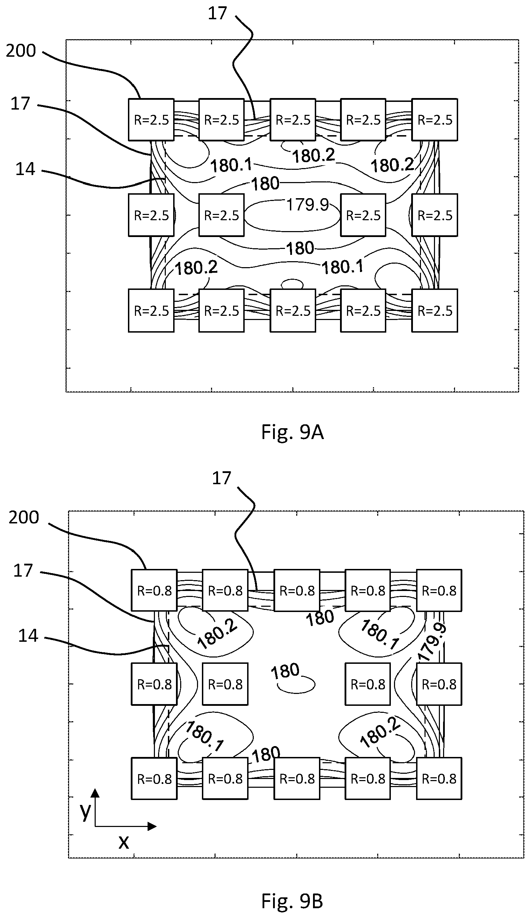

Optimised heater arrangements comprise shrouded heating elements that reduce the temperature distribution across the build bed are shown in Figures 9 to 11, and Figures 16 and 17. For these Figures, the arrangement considers 55 mm x 55 mm shrouded heating elements 200 having a shroud 220 with respective designs as indicated by respective R-values.

For these examples, the R-values correspond to a square shroud of depth of 28 mm and sides of 70 mm x 70 mm (x and y outer dimension of the shroud), for which the pitch of square sectioned passages is varied and repeated as necessary to fill the shroud, so that for
- R=2.5: x=70 mm, i.e. a "1 by 1 array" of one passage;
- R=1.25: x=35 mm, i.e. a 2 by 2 array, or 'mesh', of passages;
- R=0.8: x=23.33 mm; i.e. a 3 by 3 mesh of passages
- R=∞: no shroud/bare element, z=0.

The overall area of the Figures covers 560 mm by 460 mm in size, the same as for Figures 4 and 5.

In the heater arrangements of Figures 9A and 9b, which do not form part of the claimed invention, shrouded heating elements 200 are placed within the matrix arrangement of Figure 2A; i.e. each bare heating element of Figure 2A is replaced by a shrouded heating element. The heating elements 200 are therefore arranged according to a 5 by 3 matrix, where the central position (3; 2) is not occupied. The matrix covers an area only slightly larger than the build bed surface, such that in a projective view the outer shrouded heating elements lie across the perimeter 17 of the build bed surface. Note that in Figures 9A and 9B, the temperature profile projected onto the build bed surface extends slightly beyond the top and bottom of the perimeter 17 of the build bed surface 12

As described above, each shroud (not shown) is slightly larger than the shrouded heating element, and covers a 70 mm x 70 mm (x, y) area arranged centrally over the shrouded heating element.

For Figure 9A, the shrouds comprise one passage each having an R-value of 2.5, in other words the shroud is simply a square section passage through which radiation is emitted. For the arrangement of shrouded heating elements 200 of Figure 9A, the temperature profile at the build bed surface was simulated for a target temperature of 180°C. Resulting isothermal lines are shown, and the temperature distribution expressed in terms of standard deviation was calculated as std = 0.18°C.

Figure 9B shows an alternative heater arrangement of shrouded heating elements. The shrouded heating elements 200 are placed at the same locations as those of the arrangement of Figure 9A, but the shrouds have narrower passages of R = 0.8, forming a 3 by 3 mesh, having 9 passages, over each heating element. The standard deviation of temperature profile at the build bed surface according to the simulation was slightly improved to 0.16°C over the arrangement of Figure 9A.

Both shrouded arrangements of Figures 9A and 9B are therefore predicted to provide a significantly more uniform temperature profile at the build bed surface compared to the performance of the bare heater arrangement with common protective shroud of Figure 2A, which resulted in a temperature profile with a standard deviation std = 4.9°C from the target temperature of 180°C. Figures 9A and 9B therefore illustrate the improvement that can be achieved when using shrouded heating elements without a common protective shroud arranged in a standard matrix as the bare heating elements of the Figure 2A arrangement.

It will be noted that a reduction in the temperature distribution was also found with optimised arrangements of bare heating elements in Figures 4A and 4B, for which the standard deviation was comparable (0.16°C, 0.15°C respectively) to those of Figures 9A and 9B. In the arrangements of Figures 4A and 4B, the optimised location of bare heating elements results in a more uniform temperature profile at the build bed surface. It may therefore be expected that optimising the location of shrouded elements in Figures 9A and 9B will lead to an even lower standard deviation from the target temperature.

Alternatively or additionally therefore, optimising the location of heating elements within a heater arrangement may be used to decrease the standard deviation from the target temperature across the build bed surface. This also provides additional control to compensate for build-intrinsic hot spots or build bed variations in thermal leakage.

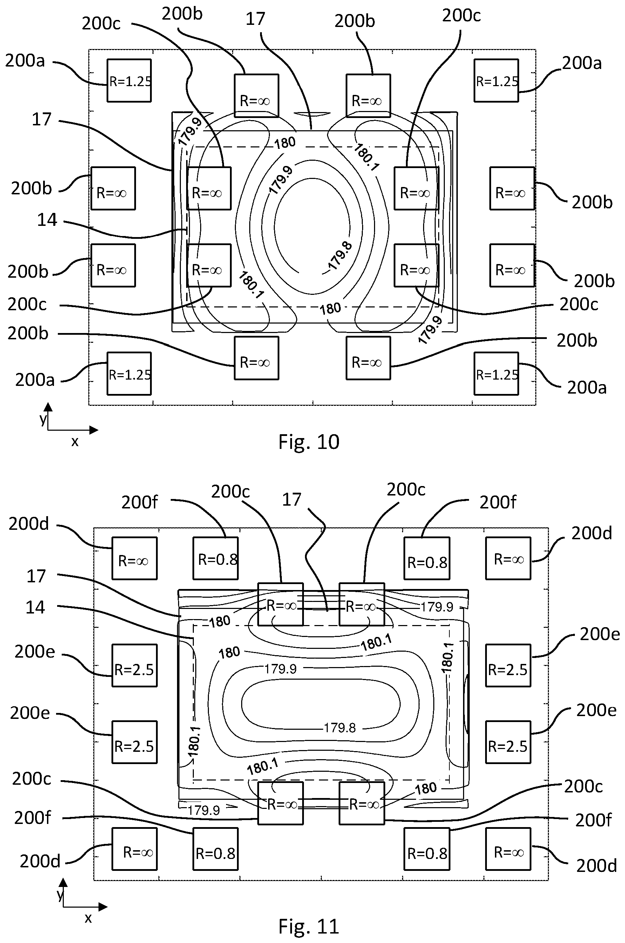

Further optimised arrangements are shown in Figures 10 and 11, and Figures 16 and 17. These Figures show that, in addition to optimising the position of shrouded elements of the same type, improvements can be achieved by optimising different types of shrouded elements (Figures 10, 11, 16, 17) and mixed arrangements of bare and shrouded elements (Figures 10, 11, 16).

### Mixture of infinite and constant R optimal layouts - adding bare elements to shrouded elements

Figures 10, 11 and 16 show implementations of mixed arrangements of shrouded and bare heating elements 200. Figures 10 and 11 further show the simulated temperature profile at the build bed surface due to their respective mixed arrangements superimposed on the build bed surface in the form of isothermal lines. The simulation predicts a temperature distribution of a standard deviation close to and below 0.1°C from a target temperature of 180°C. For each heating element 200, the respective R-value is indicated in the Figure. Note that in for Figures 10 and 11, the temperature profile projected onto the build bed surface extends slightly beyond the top and bottom of the perimeter 17 of the build bed surface 12.

In detail, Figure 10 shows the simulated temperature profile for an implementation of a heater arrangement 20 comprising a mixture of bare (R=∞) heating elements and shrouded heating elements, each shrouded heating element being provided with a radiation-absorbing shroud of R=1.25.

A first group of heating elements comprising four shrouded heating elements 200a and eight bare heating elements 200b are arranged beyond and around the perimeter 17 of the build bed surface (solid line).

In this implementation, as well as in the implementations of Figures 4, 8, 10, 11, 16, 17 and 18, the surface of the build bed has a perimeter 17 that is of a rectangular shape having a primary and a secondary axis. In addition, the printable area 14 is of a rectangular shape arranged concentrically within the perimeter of the build bed surface. The corresponding area of the heater arrangement also describes a rectangular area having a primary and a secondary axis, and is concentrically arranged with respect to the build bed surface.

With respect to the heater arrangement, the area of the heater arrangement over which the shrouded heating elements are arranged has a perimeter, and the first group comprises a first subgroup of shrouded heating elements 200a, wherein the first group is arranged within and near the perimeter of the heater arrangement area. The shrouded heating elements 200a of the first subgroup are each provided with a radiation-absorbing shroud. The first group further comprises a second subgroup of bare heating elements 200b arranged along and inside the sides of the heater arrangement area, and beyond the perimeter 17 of the build bed surface.

Furthermore, the perimeter of the build bed surface 17 of the implementation of Figure 10 is of a rectangular shape, and beyond the perimeter of the build bed surface, each far corner of the area shown is irradiated by a shrouded heating element 200a having a shroud of R=1.25. With respect to the heater arrangement, the area of the heater arrangement is of a rectangular shape having a primary and a secondary axis, wherein the first subgroup of shrouded heating elements 200a is arranged at or near the inner corners of the heater arrangement area.

A further, third, group of bare heating elements 200c, i.e. not provided with a radiation-absorbing shroud, is arranged just inside the short edge of the perimeter 14 of the printable area (dashed line).

This implementation of a mixed heater arrangement predicts a standard deviation of 0.12°C from the target temperature of 180°C.

Figure 11 shows the simulated temperature profile for an implementation of a mixture of bare heating elements (R=∞) and two sub-groups 200e and 200f of heating elements with radiation-absorbing shrouds of different R-values, R=0.8 and R=2.5; in other words a first sub-group of shrouded heating elements 200e is provided with a shroud comprising radiation-absorbing passages for which R=2.5, and a second sub-group of shrouded heating elements 200f is provided with a shroud having passages for which R=0.8. As such, the areas beyond the short sides of the perimeter 17 of the build bed surface are irradiated by the first sub-group of two shrouded heating elements 200e each, having a radiation-absorbing shroud ofR=2.5. The areas beyond the long sides of the perimeter 17 of the build bed are irradiated by the second sub-group of two shrouded heating elements 200f each having a radiation-absorbing shroud of R=0.8.

The heater arrangement 20 may therefore comprise shrouded radiative heating elements that form at least a first (in this case two) sub-groups of shrouded radiative heating elements 200e, 200f, and for each sub-group the shrouded radiative heating elements are each provided with a radiation-absorbing shroud of a design specific to the respective sub-group so as to restrict the solid angle from the shrouded heating element as desired for a uniform build bed temperature profile.

The area of the heater arrangement is of a rectangular shape having a primary and a secondary axis, and the shrouded heating elements 200e of the first subgroup are arranged along portions of the perimeter of the heater arrangement area that are parallel to the secondary axis of the heater arrangement area. The second subgroup of shrouded heating elements 200f is arranged along portions of the perimeter of the heater arrangement area that are parallel to the primary axis of the heater arrangement area.

Furthermore, in this implementation, the first and second subgroups of shrouded heating elements 200e and 200f are comprised within a first group of bare and shrouded heating elements that are arranged around and beyond the perimeter 17 of the build bed surface. With respect to the heater arrangement, the area of the heater arrangement over which the shrouded heating elements are arranged has a perimeter, wherein the first group is arranged within and near the perimeter of the heater arrangement area.

Specific designs of shrouds may be described in terms of R-value, for example in the case of square section passages comprised within the radiation-absorbing shroud. The passages of shrouds of shrouded heating elements of the first subgroup may have an R-value R1, and the passages comprised within the shroud of the second subgroup may have an R-value R2.

Furthermore, the heater arrangement may comprise two or more shrouded radiative heating elements, each of which is provided with a respective radiation-absorbing shroud.

Furthermore, the area of the heater arrangement may be of a rectangular shape having a primary and a secondary axis, wherein the first of the subgroups is arranged along portions of the perimeter of the heater arrangement area that are parallel to the secondary axis of the heater arrangement area.

Additionally, or instead, where the area of the heater arrangement is of a rectangular shape having a primary and a secondary axis, the first or second of the subgroups may be arranged along portions of the perimeter of the heater arrangement area that are parallel to the primary axis of the heater arrangement area.

Furthermore, with respect to an apparatus comprising the heater arrangement, at least a first group of the one or more shrouded radiative heating elements may be arranged beyond and around the perimeter of the build bed surface.

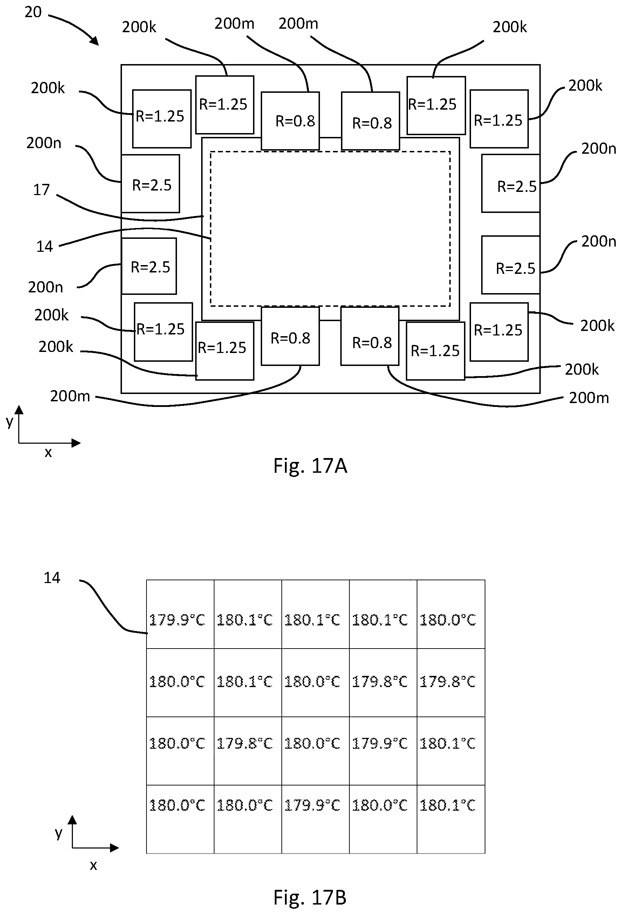

In the implementation of Figure 11, bare heating elements 200d of the first group of heating elements are located within the corners of the heater arrangement area and at the far corners beyond the perimeter 17 of the build bed surface, and along and beyond the long sides, along the primary axis, of the perimeter 14 of the printable area. In addition, bare heating elements 200c in this implementation are comprised within a second group of heating elements, the second group arranged beyond and around the perimeter 14 of the printable area. In other implementations, the second group may further, or instead, comprise shrouded radiative heating elements, as will be seen in the implementation shown in Figure 17A, so that wherein the build bed surface 12 comprises a printable area, the one or more shrouded radiative heating elements are arranged beyond and around the perimeter 14 of the printable area.

The overall shape described by the location of the radiative heating elements within the heater arrangement area in Figure 11 is that of an overall 'lemniscate' ribbon that is pinched along the centre in the secondary axis (y) direction.

The implementation of Figure 11 of a mixed arrangement predicts a standard deviation of 0.09°C from the target temperature of 180°C.

In the heater arrangements 20 of Figures 10 and 11, the heating elements 200 are spaced apart from one another by at least a distance of 50% of the element width (the elements in the implementations being identical square elements).

In the implementations of Figures 4A, 4B and Figures 10 and 11, where the build bed surface and the heater arrangement area are of rectangular shapes having a primary and secondary axis, the dimension of the build bed surface 12, along the primary axis of the build bed surface, is around 60% or less of the dimension of the heater arrangement area, along the primary axis of the build bed surface and of the heater arrangement area, where the primary axis of the heater arrangement area is substantially parallel to, or substantially coincides with the primary axis of the build bed surface. The heater arrangement area is determined by the extent of the area covered by the plurality of heating elements. The plurality of heating elements may comprise bare and/or shrouded elements.

In these examples, as with those in Figures 3 and 4, the combined area of influence of the heating elements is concentrated beyond the perimeter of the build bed surface, locking in the heat generated by the sintering steps by preventing a significant temperature differential between the edge and the centre of the build bed surface.

As has been demonstrated by Figures 8A-8D for example, the area of influence and the peak temperature response at the build bed surface for smaller R-values is reduced compared to larger ones. For the optimised arrangement of Figure 11 therefore, the heating impact of the second sub-group of shrouded heating elements (R=0.8) on the work surface 13 along the short dimension of the build bed surface 12 (along the y-direction, or secondary axis) is reduced compared to that of the first sub-group of shrouded heating elements (R=2.5) on the work surface 13 along the long dimension of the build bed surface 12 (along the x-direction, or primary axis).

Thus using shrouded heating elements of different designs creating different areas of influence and peak intensity profiles, the temperature profile at the build bed surface can be finely tuned. It is not necessary that the shrouded heating elements are spaced apart from one another since their area of influence may be controlled by the design of the radiation-absorbing shroud.

Therefore, the preceding Figures thus show that by spacing apart the bare heating elements and/or providing shrouded heating elements fitted with radiation-absorbing shrouds, the overlap between neighbouring areas of influence on the build bed surface can be controlled so as to provide a more uniform temperature profile and so as to avoid hot spots. In addition, control over the area of influence and overlaps between areas of influence may provide an improved range over which the temperature profile at the build bed surface may be controlled, by adjusting the duty cycle of respective heating elements for example.

Figure 10 further illustrates the use of shrouded heating elements 200a provided beyond and around the perimeter of the build bed surface. Each corner of the area shown is irradiated by a shrouded heating element 200a comprising a shroud of R=1.25.

Figure 11 shows the use of shrouded heating elements 200e (R=2.5) and 200f (R=0.8) provided beyond and around the perimeter of the build bed surface. In some implementations therefore, the one or more shrouded radiative heating elements may be arranged beyond and around the perimeter of the build bed surface.

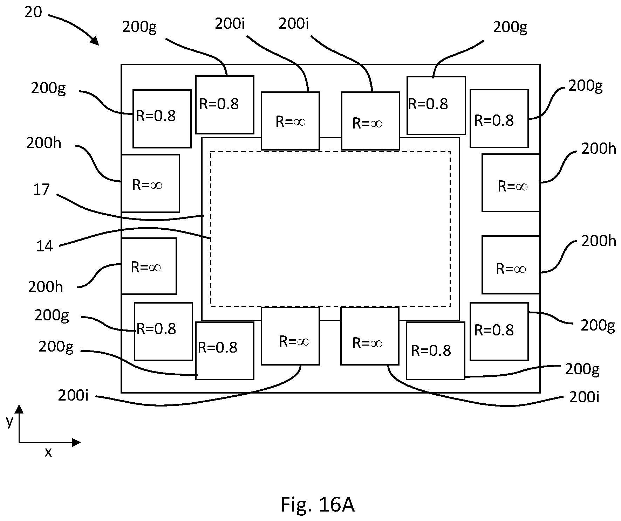

In both implementations of Figures 10 and 11 (as well as Figure 16A), bare heating elements are comprised within the heater arrangement, although this is not necessary as will be seen from the implementation shown in Figure 17A comprising solely shrouded heating elements. Therefore, the heater arrangement may further comprise one or more bare heating elements.

One or more, or all, of the bare heating elements may be comprised within the first group of heating elements, the first group of heating elements being the group that is arranged beyond and around the perimeter of the build bed surface, or, with respect to the heater arrangement area, within and near the perimeter of the heater arrangement area.

Additionally, or instead, the shrouded radiative heating elements, and, optionally, each subgroup of shrouded radiative heating elements, may be arranged in a pattern that is symmetric about said primary axis and/or said secondary axis.

Alternatively, the shrouded radiative heating elements, and, optionally, each subgroup of shrouded radiative heating elements, may be arranged in a pattern that is asymmetric about said primary axis and/or said secondary axis. This may be useful if apparatus asymmetries need to be compensated for, that cause an asymmetric temperature profile at the build bed surface. Mixed arrangements of bare and shrouded heating elements can therefore lead to optimised arrangements providing a reduction in temperature distribution across the build bed surface.

It is not necessary that the R-value or properties of the passages remain constant over the same heating element. While the implementations shown so far provide shrouds with identical passages within a given shroud, in addition, or alternatively, the passage design for one, some or all shrouds may vary, such that a heating element may be subdivided in its response by fitting it with a shroud that comprises passages of different R-values.

Furthermore, it will be understood that the R-value describes only a specific and simple example shape of passage within a shroud. Other shapes, such as hexagonal, circular or triangular cross sections will similarly restrict the radiation emitted from the heater elements and modify the temperature response on the build bed. Such passages will require to be described by a different set of properties.

### Meshes with varying R values

An array of radiation-absorbing passages forming a mesh may therefore be provided in which the passages vary in their shape and/or dimensions. For example, a sub-group of the array may restrict the solid angle of radiation that is emitted from the radiative element differently to that of a different sub-group of the array.

For a square section array, one sub-group may for example have an R-value of 0.8 and another sub-group may have an R-value of 2.5. Alternatively, the R-value (or the degree and way in which the solid angle is restricted) may vary continuously for each passage with projected distance across the build bed surface.

A property that describes the heating effect on the build bed surface of the radiation emerging from a passage is the solid angle. For a bare element located with its emission surface parallel to the build bed surface, the solid angle of radiation has a central axis that is perpendicular to the build bed surface. For a shrouded element provided with a shroud having passages such as square sections of constant depth, the solid angle of radiation emitted from the passages will also have a central axis that is perpendicular to the build bed surface. For such a passage, the outlet edge, from which the restricted radiation emerges and which faces the build bed surface, lies within a plane that is parallel to that of the build bed surface. If however the outlet edge does not lie within a plane that is parallel to that of the build bed surface, the radiation emerges from the passage at different locations with respect to the z-direction, causing the solid angle to be tilted away from the perpendicular to the build bed surface.

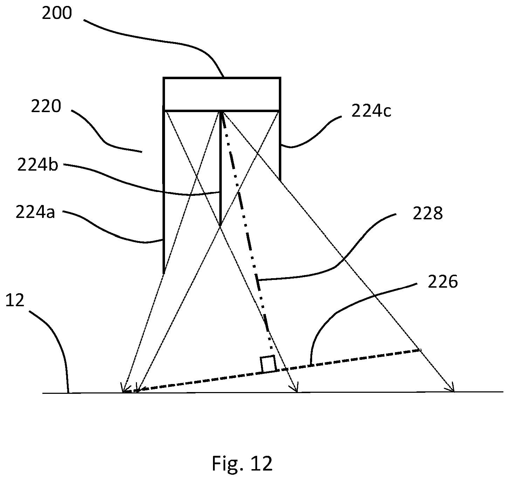

To illustrate the effect of the location of the outlet edge on the direction of the central axis of the solid angle with respect to the build bed surface, Figure 12 shows a two-dimensional representation of a shrouded heating element 200 comprising a shroud 220 of walls 224a, b, c of different depth. Radiation emerging from the shroud and passing to the build bed surface 12 is indicated by dotted arrows which represent the extremes in direction that may pass the shroud 220. For the respective extremes of radiation emerging from each passage, equal lengths of dashed arrows define a constant power line 226. The central axis of the radiation 228 describes a perpendicular to the constant power line, and it can be seen that the axis 228 is tilted with respect to the perpendicular to the build bed surface 12, i.e. it is not perpendicular to the build bed surface 12.

In a three-dimensional representation, the central axis of the solid angle emitted from the passage (or the shroud as a whole) would be tilted with respect to the perpendicular to the build bed surface.

The particular design of the passage, or the array of passages forming a mesh, may therefore be used to alter the area of influence on the build bed surface. The option to tilt the central axis of the solid angle may be viewed as an alternative, or additional degree of freedom, to provide an optimised heater arrangement.

In some implementations therefore, wherein at least one of the shrouds of the shrouded radiative heating elements comprises two or more passages, the cross section and/or depth of two or more passages may vary between at least two of the passages.

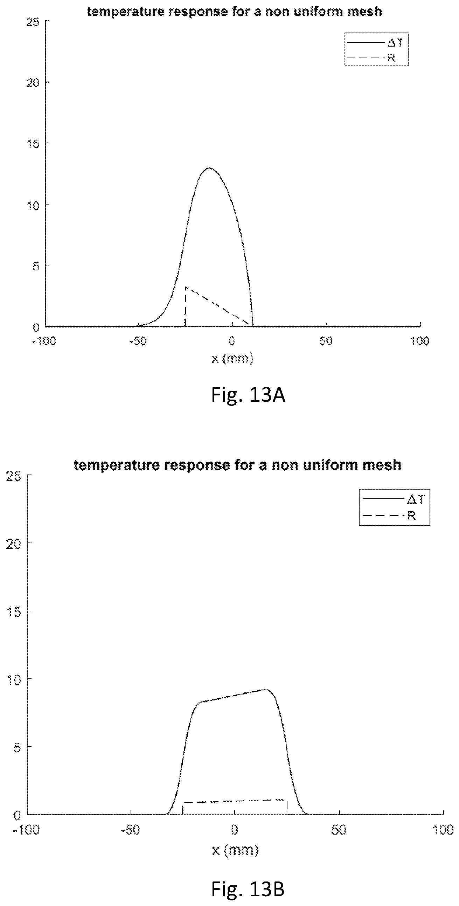

The asymmetry in solid angle that may be achieved is further illustrated in Figures 13A and 13B. These figures plot one-dimensional simulation result of temperature response at the build bed surface against distance along the build bed surface, for a heating element of 50 mm length located 10 cm above the build bed surface and emitting radiation through a mesh defined by a set of hypothetical R-values.

In the example of Figure 13A, the R-value varies linearly along the length of the heating element from an initial hypothetical R=2.5 at -25 mm down to R=0 at x = + 12.5 mm and remaining at R=0 up to +25 mm (effectively all radiation is blocked by R=0). It can be seen how the temperature response of this type of mesh is asymmetric and the temperature response is concentrated towards and beyond the high R-value side underneath the heating element.

Figure 13B shows a different asymmetric design of a hypothetical mesh and its response at the build bed surface. In this example, the R-value varies linearly from R=1 at -25 mm to R=1.3 at + 25 mm along the length of the element. This design achieves a linearly varying temperature response along the x-direction across the build bed surface over a majority of the length underneath the mesh. The maximum temperature response is located underneath the high R-value side of the mesh.

Note also how the length of the footprint of the temperature response is much reduced in the implementation of Figure 13A compared to the implementation of Figure 13B.

It can therefore be seen that it is possible to design a mesh of varying R-value across the entire matrix of heating elements.

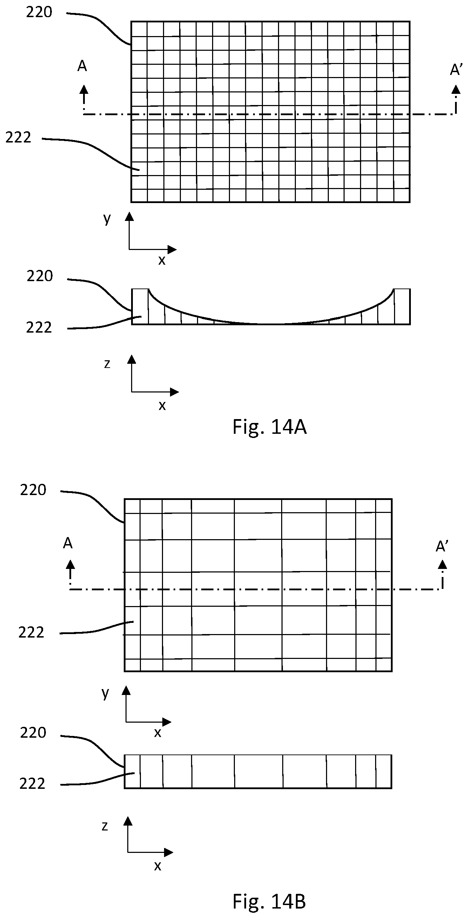

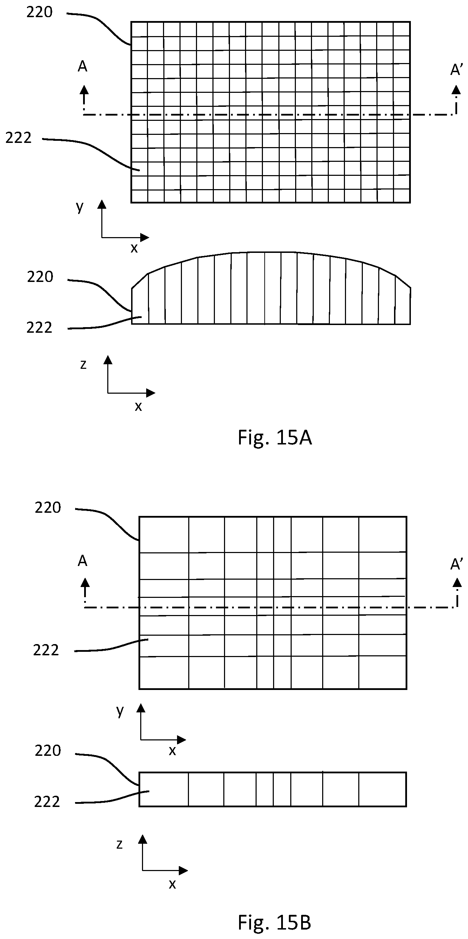

Implementations illustrating a mesh in which the R value is continuously altered are shown in Figures 14A-B and 15A-B.

In Figures 14A and 15A, shrouds 220 in plan (x-y) and side (x-z) view are shown for which the axis of the solid angle of radiation emerging from each passage 222 is continuously altered across a mesh of different passages 222. This is achieved by altering the wall height (z-dimension) from passage to passage while keeping the pitch (x and y dimension of the passages) constant. It can be seen how such a mesh cannot comprehensively be described in terms of R-value, since, despite being square sectioned passages, the outer edge at the first end of each passage is located at different depths in the z-direction.

Figure 14B and 15B show a shroud 220 having a mesh of passages 222 in plan and side view for which the depth of passages 222 remains constant, while the R-value is continuously altered by varying the pitch in the x-direction for each rows of passages and the y-direction for each column of passages. The passages are in the form of box sections of varying aspect ratio x/y.

In Figure 14B, the R-value changes from a small R-value near the edge of the mesh to a larger R-value towards the centre of the mesh. This means that the area of influence at a build bed surface underneath such a mesh due to each passage above it is larger from passages near the centre of the mesh. The temperature response at the build bed surface underneath the mesh may therefore be expected to be high near the centre of the build bed surface and low towards the perimeter of the build bed surface. A similar trend of temperature response may be expected from the mesh in Figure 14A, where the central axis of the solid angle of radiation emerging from each passage is directed towards the centre of the build bed surface (not shown) underneath the mesh.

Meshes such as those shown in Figures 14A and 14B may be expected to progressively reduce the area of influence of passages located towards the outer edges of the mesh. Such a mesh may be useful for build beds where one or more objects are being built near the corners of the build bed surface and not near the centre, so that the thermal mass of the one or more objects heats up the corners of the build bed surface more than the centre of the build bed surface and which will need to be compensated for by a suitable optimised design of shroud.

Radiation-absorbing shrouds comprising meshes achieving a different or even opposite effect may be envisaged, by creating for example an overall convex mesh surface rather than the concave surface shown in Figure 14A. Similarly, the mesh of Figure 14B may be reversed in its effect by choosing the pitch to decrease toward the centre of the mesh in the direction of both x and y. This is illustrated in Figures 15A and 15B. The mesh of shroud 220 shown in Figure 15B may be expected to cause a high temperature response in the central area of the build bed surface, since the passages 222 above it have a higher R-value (larger pitch) compared to passages near the perimeter of the mesh, which have a lower R value (smaller pitch). The mesh of Figure 15A meanwhile may be expected to cause an even temperature profile over the build bed surface below, or it may cause a higher temperature response towards areas away from the centre of the build bed surface, depending on the relative change in depth of the passages 222.

Other implementations of continuously varying meshes may be a combination of changing pitch and changing wall height from passage to passage (or from groups of passages to groups of passages), combining the effects of both Figures 14A and 14B, or Figures 15A and 15B approaches, bearing in mind that the change in wall height alters the direction of the central axis of the solid angle of radiation, and a change in pitch alters the size of the temperature response of radiation received at the build bed surface underneath the respective passage, but does not change the direction of the axis of the solid angle of radiation emerging from the passage.

Such radiation-absorbing meshes may span the entirety or at least a majority of the matrix of heating elements, for example by providing a single shroud shared between a matrix of shrouded heating elements.

In some implementations of optimised arrangements of heating elements therefore, a heater arrangement for an apparatus for layer-by-layer formation of a three-dimensional object by the consolidation of particulate matter may be provided, in which the heater arrangement comprises a plurality of shrouded radiative heating elements, arranged over a surface of said heater, the shrouded radiative heating elements being operable to heat particulate matter at a build bed surface of said apparatus to a desired temperature response. The heater arrangement further comprises one or more radiation-absorbing shrouds, which are arranged in communication with the shrouded radiative heating elements. Each of the one or more shrouds forms one or more radiation-absorbing passages for restricting the solid angle over which radiation is emitted by the shrouded radiative elements, each passage having a first end, which opens towards at least one of said shrouded radiative heating elements and a second end which opens to the exterior. In some implementations, only one such radiation-absorbing shroud may be provided to all of the plurality of shrouded radiative elements. In other implementations, the number of radiation-absorbing shrouds is less than the number of shrouded radiative elements. For example, in some heater arrangements, a radiation-absorbing shroud may cover more than one, but not all, shrouded radiative elements.

In some implementations, the area of the heater arrangement may be of similar shape as the surface of the build bed. For example, each may be of a rectangular shape having a primary and a secondary axis, and each may be concentrically arranged with respect to the other. In some implementations, the area of the heater arrangement is larger than the surface of the build bed. For example, the dimension along the major axis of the build bed surface may be 60% or less than the dimension along the major axis of the heater arrangement.

However, in some implementations the shape of the heater arrangement may not be similar to that of the build bed surface, and/or it may not be concentrically arranged with respect to the build bed surface. It may also not be larger than the build bed surface. For example, where shrouds are provided having passages of varying design that tilt the solid angle of radiation emerging from each passage, the area may be determined by the combined area of influence of one or more radiation-absorbing shrouds capable of tilting the solid angle of radiation.

In some examples therefore, the solid angle of radiation emerging from one or more passages over which at least one shrouded heating element emits radiation, may have a central axis that meets the build bed surface at an angle less than 90°; i.e. the central axis of the solid angle of radiation is not perpendicular to the build bed surface.

The angle at which the central axis of the solid angle meets the build bed surface determines the shape and heating impact of the radiative footprint, or area of influence, the passage or shrouded element has on the build bed surface. Examples achieving a tilted central axis of the solid angle are shown in Figure 12 and Figures 14A and 15A. The solid angle of square section passages, such as those shown in Figures 10 or 11, where the central axis is perpendicular to the build bed surface, has a circular area of influence on the build bed surface. A tilted central axis leads to a non-circular shape of area of influence, for example the shape may be ovoid or elliptical.

More generally, the design of a radiation-absorbing shroud determines the radiative footprint, or area of influence, of the corresponding shrouded heating element at the surface below it. The shroud is defined to have at least one radiation-absorbing passage, the passage being formed by one or more walls of height H, and having a cross-sectional shape and cross-sectional area. The radiative footprint of the passage may be altered by varying these properties. As discussed above, one simple example of varying properties is described in terms of R-value for a square section passage. The cross section of the passage may take any suitable tubular shape; it may for example be square, rectangular, hexagonal, or circular and so on.

Furthermore, or alternatively, the x/y aspect ratio of the radiation-absorbing passage(s) determines the shape of the radiative footprint at the build bed surface. Examples achieving a perpendicular central axis of the solid angle that may cause a non-circular area of influence at the build bed surface are shown in Figure 12, and Figures 14A and 15A. In such an implementation of passages, which are box-sections for which x/y≠1, the shape of the area of influence may for example be elliptical.

Therefore, the radiative property of each passage determines the radiative footprint, or area of influence, at the build bed surface of the radiation emerging from the radiation-absorbing shroud.

Furthermore, each of the radiation-absorbing passages is defined by one or more internal walls, which are configured not to reflect infrared radiation emitted from the radiative heating elements. In other words, the passages are pure cut-off elements to infrared radiation and only allow radiation emitted from the heating element at a defined range of angles to emerge from the radiation-absorbing passage, while absorbing (cutting out, or restricting) radiation emitted at all other angles.

In some implementations, the design of the radiation-absorbing mesh may be adjustable. For example, the internal walls of the meshes of Figures 14A-B and Figures 15A-B may be moveable along the major axes of the radiation-absorbing shroud so as to alter the radiative property of the mesh. This may be useful when changing the object that is being built in design and/or thermal properties, and to adjust the radiative property of the mesh during operation, for example during the cooling process of the object. The internal walls may be movable by the use of motors. In addition to altering the x/y dimensions of the passages, the walls may further be arranged to be adjustable in depth, along the z-direction, providing a further degree of varying the radiative property of the mesh.

This principle is also applicable to individual radiation-absorbing shrouds covering corresponding shrouded heating elements. In some examples, the depth of the radiation-absorbing shroud may be adjustable along the z-direction, and/or along the x and y direction, so as to alter the radiative property of one or more shrouded heating elements within the array of heating elements.

### With respect to the first example, and adding shrouded elements

Returning to the first example of arrangements of a plurality of heating elements comprising a first group of heating elements arranged beyond and around the perimeter of the build bed surface, it may be advantageous that the plurality of heating elements comprise a mixture of bare and shrouded heating elements, for example at least one or more shrouded radiative heating elements within the plurality of heating elements, where each shrouded heating element is provided with a radiation-absorbing shroud. Some or all of the shrouded heating elements may be part of the first group or may not be part of the first group, i.e. they may be provided as part of a first group arranged beyond and around the perimeter of the build bed surface, or they may, alternatively or additionally, be provided as part of a second group arranged beyond and around the printable area. Furthermore, some or all of the shrouded elements may be provided as part of a further group arranged within or across the perimeter of the build bed surface and/or the perimeter of the printable area. This may provide additional or more finely tunable, or zonal, control over the temperature profile of the build bed surface.

Examples of implementations of such mixed arrangements of heating elements are shown in Figures 10, 11, and 16A. Here, the plurality of heating elements comprises shrouded heating elements. Each shrouded radiative heating element 200 of the plurality of radiative heating elements is provided with a respective radiation-absorbing shroud 220. Each radiation-absorbing shroud 220 is arranged between the corresponding shrouded radiative heating element 200 and the build bed surface 12, and comprises one or more radiation-absorbing passages 222 (not shown) for restricting the solid angle of radiation over which the corresponding shrouded radiative heating element emits radiation. Each radiation-absorbing passage has a first end, which opens towards said bottom side, and a second end, which is directed towards said top side and opens towards the corresponding shrouded radiative heating element.

In some implementations, one or more of the shrouded radiative heating elements may be a member of the first group. Alternatively, each shrouded radiative heating element may be a member of said first group, so that all shrouded heating elements amongst the plurality of radiative heating elements are located beyond and around the perimeter of the build bed surface.

In these implementations, at least one of said radiation-absorbing shrouds may be formed as a mesh comprising an array of two or more radiation-absorbing passages.

Additionally, or alternatively, one or more of the shrouded radiative heating elements may form at least one sub-group of shrouded radiative heating elements and, for each sub-group, the shrouded radiative heating elements may each be provided with a shroud of a design specific to the respective sub-group.

In other implementations it may instead be advantageous to provide at least a first of the one or more sub-groups of shrouded heating elements to the first group of heating elements. In other words, one or more sub-groups of shrouded heating elements may be comprised within the first group of the plurality of heating elements. This may provide additional control over the temperature profile in the corner regions of the area beyond the perimeter of the build bed surface, and help to avoid cool spots in the corner regions without having significant impact on other areas beyond or within the perimeter of the build bed surface. An example of such an arrangement is shown in Figure 11, where a first group of heating elements is arranged beyond and around the perimeter of the build bed surface, and the first group comprises bare heating elements 200d without shroud (R=∞) and shrouded heating elements 200f provided with a radiation-absorbing shroud having radiation-absorbing passages for which R=0.8.

It is not necessary that the shrouded heating elements described for the first or second examples comprise radiation-restricting shrouds of identical design. Instead, two or more of the shrouded heating elements may form two or more sub-groups of shrouded heating elements and, for each sub-group, the shrouded radiative heating elements may each be provided with a shroud of a design specific to the sub-group in question.

For example, the radiation-absorbing passages comprised within the shroud of a first subgroup may have an R-value R1, and the passages comprised within the shroud of a second subgroup may have an R-value R2. An example of such an arrangement is shown in Figure 11.

In Figure 11, four bare heating elements 200d (R=∞, or no shroud) are arranged each in one corner of the area shown, which is an area beyond and around the perimeter 17 of the build bed surface. The shrouded heating elements 200d are therefore part of the first group of the plurality of heating elements. Also comprised within the first group are a first sub-group of shrouded heating elements 200f provided with a shroud comprising passages for which R=0.8, located beyond and along the long edge of the perimeter 17 of the build bed surface, and a second sub-group of shrouded heating elements 200e provided with a shroud comprising passages for which R=2.5, located beyond and along the short edge of the perimeter 17 of the build bed surface.

Therefore, in implementations wherein the surface of the build bed is of a rectangular shape having a primary and a secondary axis, a first of the subgroups of shrouded heating elements may be arranged beyond and along portions of the perimeter of the build bed surface that are parallel to the primary axis of the build bed surface. Additionally or instead, a second of the subgroups of shrouded heating elements may be arranged beyond and along portions of the perimeter of the build bed surface that are parallel to the secondary axis of the build bed surface.

In some implementations, at least a first of the one or more sub-groups of shrouded heating elements may be comprised within the first group of heating elements.

In some implementations, where the build bed surface is of a rectangular shape having a primary axis and a secondary axis; the radiative heating elements may be arranged in a pattern that is symmetric about the primary axis and/or said secondary axis. Additionally, the primary axis of the build bed surface may be longer than the secondary axis of the build bed surface, or the primary axis of the build bed surface may be the same length as the secondary axis of the build bed surface.

In some implementations in which a first subgroup of shrouded heating elements is part of a first group of heating elements arranged beyond and around the perimeter of the build bed surface, and where the build bed surface is of a rectangular shape having a primary and secondary axis, the first subgroup of shrouded heating elements may be arranged within, and near the corners of, the build bed surface. Additionally, the shrouded heating elements of the first subgroup may be arranged symmetrically about the primary and/or secondary axes of the build bed surface.

**In** some implementations, the first subgroup of shrouded heating elements may be arranged along the major axis of the surface of the build bed, that is to say the first subgroup of shrouded heating elements may be arranged in a direction parallel to the major axis of the build bed surface and beyond and around the perimeter of the build bed surface

Furthermore, a second of the subgroups of shrouded heating elements may be comprised within the first group and may be arranged along the minor axis of the perimeter of the build bed surface; that is to say the second subgroup of shrouded heating elements may be arranged in a direction parallel to the minor axis of the build bed surface and beyond and around the perimeter of the build bed surface.

**In** some implementations, a second subgroup of shrouded heating elements may be comprised within the first group of heating elements in addition to a first subgroup of shrouded heating elements (the first group being arranged beyond and around the perimeter of the build bed surface). The build bed surface may be of a rectangular shape, and the second subgroup may be arranged along the minor axis (short side) of the perimeter of the build bed surface. The first group may further comprise bare heating elements arranged beyond and in proximity to the corners of the build bed surface.

Further still, where the build bed surface is of a rectangular shape having a primary and secondary axis, the dimension of the build bed surface 12, along the primary axis of the build bed surface, may be around 60% or less of the dimension of the heater arrangement, along the primary axis of the build bed surface and of the heater arrangement area, where the primary axis of the heater arrangement is substantially parallel to, or substantially coincides with the primary axis of the build bed surface. The dimension of the area of the heater arrangement is determined by the extent of the rectangular area covered by the plurality of heating elements. The plurality of heating elements may comprise bare and/or shrouded elements.

In some implementations, where the build bed surface comprises a printable area, the plurality of radiative heating elements may comprise a second group of heating elements arranged beyond and around the perimeter of the printable area.

Additionally, the plurality of heating elements may consist of the first and second group of heating elements.

### The concept of printable area

In some applications, the printable area may be used to define the surface of the build bed over which the temperature needs to be closely controlled. The printable area is the area over which the printheads are capable of printing onto the build bed surface. The printable area is therefore at most as large as the build bed surface. Typically, the printable area is slightly smaller, so that a thin buffer layer of powder is present between the walls containing the build bed and an object surface of any object that may be formed close to the walls containing the build bed. Such a buffer layer may for example be around 1 cm thick.

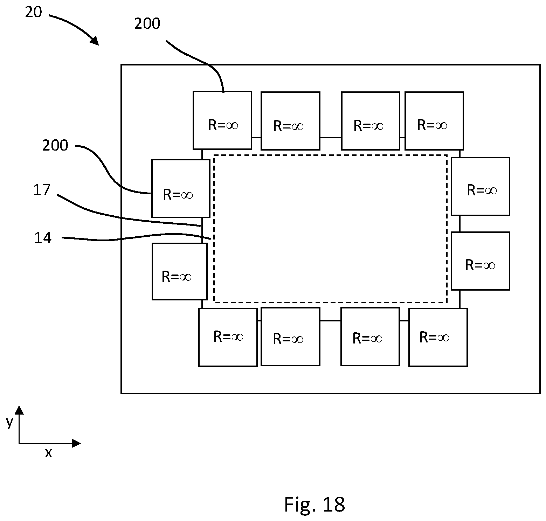

In a third example therefore, it is possible to provide optimised arrangements which does not form part of the claimed invention, of heating elements in which a first group of radiative heating elements is arranged around and beyond the perimeter of the printable area. This is illustrated in Figure 18. A heater arrangement 20 of a plurality of bare heating elements (R=∞) 200 is arranged beyond and around the perimeter 14 of the printable area. These elements form the first group of heating elements in this example. There are no heating elements arranged around and beyond the build bed perimeter 17 in this example.

The first group of heating elements is arranged beyond and around the (projected) perimeter of the printable area, where 'beyond' means outside, or outside and immediately adjacent to, the perimeter, but not crossing the perimeter so as to partially fall within the printable area.

The printable area may for example be defined by the print swathe width achieved by the printheads, as the maximum printable area. Where the printheads extend beyond the build bed perimeter, along a first dimension of the build bed surface, the dimension of the printable area in the direction of the first dimension is the same as that of the build bed surface. This definition applies to all embodiments.

The heating elements that are comprised within the first group of heating elements may be bare and/or shrouded heating elements.

Therefore, an apparatus for layer-by-layer formation of a three-dimensional object by the consolidation of particulate matter may be provided, the apparatus comprising: a working space having opposing bottom and top sides; a build bed surface on said bottom side of the working space and upon which successive layers of said object are formed, the build bed surface comprising a printable area; and a heater arrangement area on said top side of the working space and comprising a plurality of radiative heating elements arranged on said top side of the working space, the radiative heating elements being operable to heat particulate matter at the build bed surface to a desired temperature profile; wherein said plurality of radiative heating elements comprises a first group of one or more radiative heating elements; and wherein, as viewed from said top side of the working space, said first group of one or more heating elements is arranged beyond and around the perimeter of printable area and within the heater arrangement area.

A further example of such an arrangement may be seen in Figure 4A, where a heater arrangement 20 comprises heating elements 200 above a build bed surface having a perimeter 17 and a printable area having a perimeter 14.

The first group of heating elements 200b and 200a are arranged around and beyond the perimeter of the printable area 14.

In some implementations of the apparatus, the first group may comprise one or more bare heating elements.

In other implementations of the apparatus, the first group may consist of bare heating elements, as is for example shown in Figure 4A.

Additionally, the plurality of radiative heating elements may comprise one or more shrouded radiative heating elements, each shrouded radiative heating element being provided with a respective radiation-absorbing shroud; wherein each radiation-absorbing shroud is arranged between the corresponding shrouded radiative heating element and the build bed surface, and comprises one or more radiation-absorbing passages for restricting the solid angle over which the corresponding shrouded radiative heating element emits radiation, each radiation-absorbing passage having a first end, which opens towards said bottom side, and a second end, which is directed towards said top side and opens towards the corresponding shrouded radiative heating element.

In addition, the one or more of the shrouded radiative heating elements may form at least one sub-group of shrouded radiative heating elements and, for each sub-group, the shrouded radiative heating elements are each provided with a radiation-absorbing shroud of a design specific to the respective sub-group.

Additionally, or instead, the one or more of said radiation-absorbing shrouds provided to corresponding shrouded radiative heating elements may each comprise two or more sub-groups of radiation-absorbing passages and the design of the radiation-absorbing passages for each sub-group of passages is specific to the sub-group of passages in question.

Additionally, at least a first of the sub-groups of shrouded heating elements may be comprised within the first group of heating elements.

An example of such an arrangement is shown in Figure 11. A first group of heating elements comprises bare heating elements 200c, shrouded heating elements 200f forming a first subgroup, and shrouded heating elements 200e forming a second sub group, the first group arranged around and beyond the perimeter of the printable area.

Additionally, at least one of said radiation restricting shrouds may be formed as a mesh comprising an array of two or more passages. For example, the shrouded elements of Figure 11 are provided with shrouds of R=0.8, i.e. they are formed as a mesh comprising nine passages (a 3 by 3 array).

In some implementations of the apparatus, the plurality of radiative heating elements may comprise a second group of heating elements arranged beyond and around the perimeter of the build bed surface. In such cases, the second group is comprised within the first group, since both groups are arranged around and beyond the perimeter of the printable area. For example, in Figure 11, heating elements 200d, 200f and 200e may be members of the second group. They are also members of the first group, which further comprises bare heating elements 200c.

In some implementations of the apparatus, one or more of the shrouded radiative heating elements may be a member of the first group.

In other implementations of the apparatus, each shrouded radiative heating element may be a member of said first group.

In some implementations comprising shrouded and/or bare heating elements, the build bed surface may be of a shape having a primary axis and a secondary axis; and the radiative heating elements may be arranged in a pattern that is symmetric about said primary axis and/or said secondary axis.

In other implementations comprising shrouded and/or bare heating elements, the build bed surface may be of a shape having a primary axis and a secondary axis; and the radiative heating elements are arranged in a pattern that is asymmetric about said primary axis and/or said secondary axis.

### Examples of optimised arrangements

Turning now to an illustration of using an optimised mixed arrangement, Figure 16A shows an optimised mixed arrangement 20 of heating elements comprising bare and shrouded heating elements. Two groups of heating elements can be seen: the first group comprises spaced-apart bare heating elements 200i and 200h (R=∞); the second group comprises shrouded heating elements 200g provided with radiation-absorbing shrouds having a radiative property described by R=0.8 (x=y=23.33 mm, z=28 mm). In this implementation of an optimised arrangement, the second group, or the shrouded heating elements, is arranged around and beyond the perimeter 17 of the build bed surface. The first group comprises a first sub-group of spaced-apart bare heating elements 200g, also arranged around and beyond the perimeter 17 of the build bed surface, and a second sub-group of spaced-apart bare heating elements 200i, arranged partially across the perimeter 17 of the build bed surface but around and beyond the printable area 14, indicated by a dashed line. The heating elements are of size 55 mm x 55 mm, and the radiation-absorbing shrouds span 70 mm x 70 mm, in the x and y directions and are centred over the heating elements.

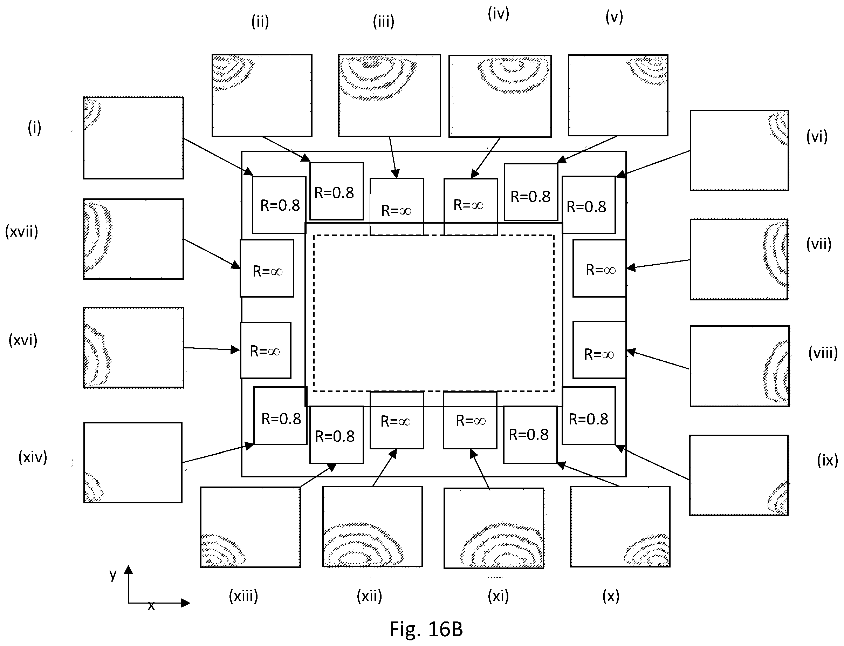

For the implementation of Figure 16A, the area of influence of each heating element is indicated in plots (i)-(xvii) within Figure 16B. These plots show the effect of each heating element in turn over the entire build bed surface. The outermost contour line represents the 70% line of the peak temperature profile due to the heating element, delineating the area of influence of the heating element.

It can be seen how the corner elements (i), (vi), (ix) and (xiv), which are shrouded elements located beyond the perimeter of the build bed surface and comprising a mesh of R=0.8 (a 3 by 3 array of square sectioned passages), have a very tightly controlled area of influence that addresses the corners of the build bed surface. The four bare elements (iii), (iv), (xi) and (xii) of the second sub-group of bare heating elements 200i, arranged partially across the perimeter 17 of the build bed surface but around and beyond the printable area 14, have large areas of influence that, in combination, reach across the entire build bed surface. It should be noted that the overlap of their areas of influence is controlled by the spacing between them, i.e. they are not directly adjacent and touching but are instead physically separated, or spaced-apart.

The overall shape described by the location of the radiative heating elements within the heater arrangement area of Figure 16A is that of an overall 'lemniscate' ribbon that is pinched along the centre in the secondary axis (y) direction.

Figure 17A shows a further optimised arrangement which does not form part of the claimed invention consisting purely of subgroups of shrouded elements, each provided with a radiation-absorbing shroud. The three sub-groups of the group of shrouded heating elements are: a first sub-group 200k having an R=1.25 (x=y=35 mm; z=28 mm); a second sub-group 200n having an R=2.5 (x=y=70 mm; z=28mm); and a third sub-group 200m having an R=0.8 (x=y=23.33 mm; z=28 mm). As before, the heating elements were of size 55 mm x 55 mm, and the shrouds spanned 70 mm x 70 mm in the x and y directions and were arranged centrally over the heating elements.

The first and second sub-groups 200k, 200n are arranged around and beyond the perimeter 17 of the build bed surface, and the third sub-group 200m is arranged around and beyond the printable area perimeter 14. The first and second subgroups form a first group of shrouded elements arranged around and beyond the perimeter 17 of the build bed surface, and the third subgroup of shrouded elements forms a second group of shrouded elements arranged around and beyond the printable area perimeter 14. As with the other implementations illustrated in Figures 3, 8, 9, 10 and 15, both the build bed surface and the printable area are of a rectangular shape, as is the shape of the heater arrangement comprising the plurality of shrouded heating elements, each having a primary and a secondary axis.

The overall shape described by the location of the shrouded radiative heating elements within the heater arrangement area of Figure 17A is that of an overall 'lemniscate' ribbon that is slightly pinched in dimension along the centre in the secondary axis (y) direction.

The perimeters of the surfaces/areas are arranged substantially concentrically with respect to each other, however this is not essential. For example, using shrouds comprising passages that create a tilted solid angle with respect to the build bed surface, the heater arrangement may be of a non-rectangular shape, and/or may not be arranged concentrically above the rectangular shape of the build bed surface. In other implementations, the build bed surface and/or printable area may not be rectangular, but may take different shapes.

Therefore, in some implementations of optimised heater arrangements, a first group of heating elements may comprise at least a first of the one or more subgroups of shrouded heating elements, wherein the first group is arranged around and within close proximity to the perimeter of the heater arrangement area.

Furthermore, the area of the heater arrangement may be of a rectangular shape having a primary and a secondary axis, wherein the first of the subgroups is arranged at or near the inner corners of the heater arrangement area.

Additionally, a second of the subgroups may be arranged along portions of the perimeter that are parallel to the secondary axis of the heater arrangement area.

Furthermore, a third of the subgroups is arranged along portions of the perimeter that are parallel to the primary axis of the heater arrangement area.

The location of the heating elements over the arrangement area may describe a general lemniscate shape, i.e. a ribbon shape that is pinched along a line that may be centred about the build bed surface, as can be seen from the arrangement in Figure 17A. In asymmetric arrangements the line may not be centred, and the ribbon shape may be asymmetric and/or skewed.

In the implementations of heater arrangements of Figures 16 and 17, where the build bed surface and the heater arrangement are of rectangular shapes having a primary and secondary axis, the dimension of the build bed surface 12, along the primary axis of the build bed surface, is around 60% or less of the dimension of the heater, along the primary axis of the build bed surface and of the heater arrangement area, where the primary axis of the heater arrangement area is substantially parallel to, or substantially coincides with the primary axis of the build bed surface. The dimension of the heater arrangement is determined by the extent of the rectangular area covered by the plurality of heating elements. The plurality of heating elements may comprise bare and/or shrouded elements.

For this optimised arrangement, the temperature distribution was assessed during real time operation, during which the duty cycle of each shrouded heating element was varied regularly in response to heating effects due to the build process on the build bed surface. A thermal image of the build bed surface was taken by a thermal camera located in the centre of area of the heater arrangement. The image was divided into a matrix of 5 by 4 zones, and for each zone, the average temperature was obtained. The result is shown in Figure 17B. The measurement shows that, using an optimised arrangement of shrouded heating elements, the temperature at the build bed surface during real time operation of a build process can be controlled to within a standard deviation of 0.10°C from a target 180°C.

In contrast, the thermal image of Figure 2C from a known arrangement of bare heating elements surrounded by a common protective shroud, and obtained similarly during a build process during which the duty cycle of each heating element was varied regularly in response to heating effects of the build process on the build bed surface, can only achieve a standard deviation of 4.9°C from a target 180°C.

Therefore, optimised arrangements of heating elements as described herein allow not only a significant improvement over the temperature control of the build bed surface, but also make it possible to control the temperature profile at the build bed surface to within a temperature distribution having a standard deviation of std < 1°C from a target temperature, or even to within a standard deviation of 0.25°C or less from a target temperature. During operation of the apparatus using an optimised arrangement of heating elements of the first or second examples (and including mixed arrangements), the temperature profile may be kept uniform across the build bed surface to within a standard deviation of 0.1°C or less from a target temperature by adjustment of duty cycle of each heating element during operation. It is believed that the ability to control the area of influence of each heating element by its location and/or solid angle of radiation, by spacing apart the bare heating elements and/or providing shrouded heating elements fitted with radiation-absorbing shrouds, the overlap between neighbouring areas of influence on the build bed surface can be controlled so as to provide a more uniform temperature profile and so as to reduce the occurrence of hot spots. In addition, control over the area of influence and overlaps between areas of influence is believed to provide an improved range over which the temperature profile at the build bed surface may be controlled.

### Further heater arrangement and apparatus considerations

As has been described, some implementations of optimised arrangements of heating elements and apparatus comprising such arrangements comprise a plurality of shrouded heating elements. Alternatively, or additionally, a single radiation-absorbing shroud may be provided to cover some or all of the shrouded heating elements. The shrouded elements may cover a (projected) surface of the build bed and a (projected) area beyond and around the perimeter of the build bed surface. In the following, where further considerations regard shrouded heating elements, the considerations apply to the heater arrangement and apparatus comprising such arrangements alike.

In some apparatus comprising the arrangements according to any of the embodiments, the build bed surface may have a primary axis and a secondary axis. The primary axis may be longer than the secondary axis, such that the build bed surface may have a generally rectangular shape; alternatively, the primary axis and secondary axis may be of the same length, such that the build bed surface may have a generally square shape.

Additionally, or instead, the radiative heating elements of the plurality of heating elements are arranged in a pattern that is symmetric about the primary axis and/or the secondary axis in order to achieve uniform control of the temperature profile at the build bed surface. Similarly, the shrouded heating elements may be arranged in a pattern that is symmetric about the primary axis and/or the secondary axis in order to achieve uniform control of the temperature profile at the build bed surface.

For example, Figure 10 illustrates shrouded heating elements, each provided with a radiation-absorbing shroud for which R=1.25, provided in a pattern that is symmetric about the primary axis (along direction x) and in a pattern that is symmetric about the secondary axis (along direction y) for a generally rectangular build bed surface.

Where two or more sub-groups of shrouded radiative heating elements are each provided with a shroud of a design specific to the sub-group in question, each sub-group may optionally be arranged in a pattern that is symmetric about the primary axis and/or the secondary axis. For example, Figure 11 illustrates shrouded heating elements of a first sub-group, each provided with a radiation-absorbing shroud for which R=0.8, provided in a pattern that is symmetric about the primary axis (along direction x) and shrouded heating elements of a second sub-group, each provided with a radiation-absorbing shroud for which R=2.5, provided in a pattern that is symmetric about the secondary axis (along direction y) for a generally rectangular build bed surface.

For some implementations of the first example, the first group of radiative heating elements may comprise an even number of radiative heating elements, for example at least two radiative heating elements, or at least four radiative heating elements. This means they may be arranged symmetrically beyond and around the perimeter of the build bed surface to achieve a symmetric temperature profile across the build bed surface. In typical applications, the perimeter of the build bed surface may describe a rectangular or square outline. A symmetric arrangement of bare heating elements is shown in the examples in Figures 4 and 5.

Some implementations of the present embodiments may comprise two or more shrouded radiative heating elements, or at least four shrouded heating elements, or an even number of shrouded heating elements, each of which is provided with a respective radiation-directing shroud. Regarding the first and second examples, this means the shrouded heating elements may be arranged symmetrically beyond and around the perimeter of the build bed surface to achieve a symmetric temperature profile across the build bed surface. In typical applications, the perimeter of the build bed surface may describe a rectangular or square outline. Examples of symmetric arrangements of shrouded heating elements are shown in Figure 9A and Figure 9B.

Regarding the third example, this means the shrouded heating elements may be arranged symmetrically beyond and around the perimeter of the printable area to achieve a symmetric temperature profile across the build bed surface. In typical applications, the perimeter of the printable area may describe a rectangular or square outline.

With respect to all embodiments, while a symmetric pattern of heating elements may be chosen in some implementations over the area of the heater arrangement, in other instances it may be desirable to create an asymmetric pattern to compensate for specific heating effects governed by the build bed design or the specific object that is being formed.

For example, the build bed may be in the vicinity of components that are not arranged such that they allow a symmetric path for temperature to dissipate across the perimeter of the build bed surface. Another example that may occasion the need for an asymmetric arrangement of heating elements is due to the properties of the object that is being formed. The sintering lamps impart high power to the sintered areas, so that the object presents a thermal mass within the build container located below the build bed surface and holding the layers that have been formed and processed. The thermal mass of the object itself may be asymmetric in its shape and/or its location with respect to the build bed and the build bed surface. This thermal mass may heat the surrounding powder in addition to the heater arrangement, in a pattern that is asymmetric for example about the major axes of the build bed surface, where the build bed surface is of a rectangular shape, although the same considerations apply for other shapes. As the object formation process evolves, the mass may heat the build bed surface significantly.

This may in turn require other parts of the build bed surface to be heated more than the area heated by the mass, in order to create a uniform temperature profile at the build bed surface. As a result, the heating elements may need to be arranged in a configuration that is asymmetric about the primary and/or secondary axes of the build bed surface. In this case, the simulations of temperature profile of the heating elements as shown in Figures 4A, 4B and 9-11 may further take into the account the temperature profile at the build bed surface due to the thermal mass.

Therefore, the heater arrangement 20 may comprise heating elements wherein the radiative heating elements are arranged in a pattern that is asymmetric about said primary axis and/or said secondary axis. The heating elements may comprise bare and/or shrouded heating elements. Furthermore, in implementations of heater arrangements in which two or more shrouded radiative heating elements form two or more sub-groups of shrouded radiative heating elements and for which, for each sub-group, the shrouded radiative heating elements are each provided with a shroud of a design specific to the sub-group in question, the shrouded heating elements of at least one of the subgroups may be arranged in a pattern that is asymmetric about said primary axis and/or said secondary axis, or about a central axis in the horizontal plane, of the heater arrangement area.

With respect to any of the embodiments, in some examples comprising one or more shrouded heating elements, at least one of the radiation-absorbing shrouds corresponding to the one or more shrouded heating elements is formed as a mesh comprising an array of two or more radiation-absorbing passages. This means that the radiation-absorbing shroud of one or more shrouded heating elements comprises at least a 1 by 2 array, or a 2 by 1 array of radiation-absorbing passages forming a mesh. In other words, at least one of the shrouded heating elements is provided with a radiation-absorbing shroud that does not simply represent a wall around the outer perimeter of the heating element.

Where at least one of the radiation-absorbing shrouds of the shrouded radiative heating elements comprises a mesh formed of an array of two or more radiation-absorbing passages, the radiative properties of the two or more passages may vary between at least two of the passages. This creates a variation in radiative footprint between the shrouded heating elements.

**In** the implementations shown, the mesh covers all of the shrouded heating elements; however this is by no means essential. **In** some implementations, some of the shrouded heating elements may be provided with shrouds that only partially cover the corresponding heating element. Additionally or instead, a shroud may be shared between two or more of the shrouded heating elements.

The radiation-absorbing passages may comprise two or more sub-groups of one or more radiation-absorbing passages each, where each subgroup has a different radiative footprint.

**In** some implementations of heater arrangements comprising shrouded heating elements, one or more of the radiation-absorbing shrouds provided to corresponding shrouded radiative heating elements each comprise two or more sub-groups of radiation-absorbing passages and, for each sub-group of passages, the design of passages (such as cross section and/or depth of the passages) is specific to the respective sub-group of passages. For example, one shrouded heating element may be provided with a radiation-absorbing shroud having two sub-groups of passages where the design of the passages varies between at least two of the passages.

**In** some implementations comprising shrouded heating elements, at least one of the radiation-absorbing shrouds may comprise two or more radiation-absorbing passages.

**In** some examples, the radiative footprint of the mesh may vary continuously across the shroud, such that for example one or more of wall height, cross-sectional shape and cross-sectional area may be altered from one radiation-absorbing passage to the next, or from a subgroup of radiation-absorbing passages to the next subgroup of radiation-absorbing passages.

**In** some examples, the heating elements may form a regular matrix above and beyond the projected area of the build bed surface, and the corresponding radiation-absorbing shrouds comprise meshes of passages that, together, vary in their radiative footprints across the entire matrix of heating elements so as to provide a uniform temperature profile at the build bed surface.

**In** some examples, instead of a regular matrix of heating elements positioned above and beyond the surface of the build bed, a plurality of shrouded heating elements may comprise a single radiation-absorbing shroud having a mesh of radiation-absorbing passages that continuously vary in their radiative footprint across the build bed surface so as to provide a uniform temperature profile at the build bed surface.

As described above, the properties of each radiation-absorbing passage determine the radiative footprint (area of influence) of a shrouded heating element. In some examples, the cross section and/or depth of each passage may determine the radiative footprint. The properties may be varied so as to create a solid angle that is asymmetric about the plane perpendicular of the build bed surface. For example, the outlet at the first end of the passage which opens towards the bottom side of the working space may have a perimeter that is not planar with respect to the build bed surface. It may instead be tilted with respect to the build bed surface, which will tilt the solid angle of radiation emerging from the passage with respect to the perpendicular to the build bed surface. A very simple illustration of a mesh with radiation-absorbing passages where the axis of the solid angle of radiation emerging from each passage is continuously altered is shown in Figure 14A and 15A, in plan and side view. Such a mesh may for example span the entirety or at least a majority of the matrix of heating elements, for example by providing a single radiation-absorbing shroud shared between a matrix of shrouded heating elements.

In some examples, this may lead to a solid angle of radiation emerging from one or more radiation-absorbing passages over which at least one shrouded heating element emits radiation, where the central axis of the solid angle is meets the build bed surface at an angle less than 90°; i.e. it is not perpendicular to the build bed surface.

In the above implementations describing shrouded heating elements, each of the radiation-absorbing passages comprised within the shrouds are defined by one or more internal walls. For the sake of the above simulations, the internal surfaces of passages were assumed to be black or radiation-absorbing. The passages of shrouds in the measured optimised arrangements of Figure 16A and Figure 17A also had black internal surfaces. Therefore, the one or more internal walls may be configured to not reflect the radiation emitted by the radiative heating elements. The internal wall(s) may be radiation-absorbent, for example they may be black in colour. The radiation-absorbing shrouds of the shrouded heating elements may therefore present cut-off elements to the radiation emitted by the shrouded heating elements. This prevents potentially undesirable reflection and redirection of radiation that are expected to result in poor control over temperature at the build bed surface. In addition, if a shroud with reflective walls were to be used, the hot particulate atmosphere within the working space may cause a progressively build-up of black deposits on the internal walls, thus gradually reducing their reflectivity and altering over time the area of influence of the corresponding heating element. Such a change may be undesirable since consistent performance of the shrouded heating element is not assured. Therefore, using pure radiation-absorbing shrouds from the beginning ensures reliable output of the area of influence due to the shrouded heating elements.

In some implementations, the radiative footprint of each of the radiative heating elements may cover less than the surface of the build bed. This may describe a situation where a number of discrete heating elements are arranged above the build bed surface and, when projected onto the build bed surface, may further be arranged beyond and around the perimeter of the build bed surface. A desirable configuration of heating elements may be achieved where each heating element has an area of influence, or radiative footprint, that only covers a part of the build bed surface, and it is the radiative footprint of the plurality of radiative heating elements that covers the entire surface of the build bed to create a uniform temperature profile at the build bed surface. For some of the implementations shown, at least some the heating elements have a radiative footprint that covers part of an area beyond the perimeter of the build bed surface.

In addition, it can be seen that in the case of shrouded radiative heating elements, it is not necessary for the heating elements to be spaced apart to manage their area of influence. Instead, they may be fitted close together and the area of influence may be managed by a specific shroud/mesh design of a shroud at least partially covering the heating elements in question.

An optimised mesh may dictate the size of the heating element (or the size that more than one heating elements needs to cover) required to achieve the target temperature. This is demonstrated in the implementations of Figures 4A, 4B, 10 and 11, for example, where the positions of heating elements fall outside of the build bed surface, i.e. the heater arrangement spans a larger area than the area occupied by the build bed surface. In these Figures, the length of the major axis (x-axis) of the build bed surface represents just over 60% of the length of the major axis of the arrangement of the bare and/or shrouded heating element(s).

The implementations described for any of the present embodiments (and variants thereof) may be suitable for any powder (or other particulate matter) bed process that requires accurate control of temperature of the build bed surface.

Such implementations of optimised heater arrangements 20 may be particularly suitable for applications for the formation of three-dimensional objects that require management of the temperature of the surface of a bed of particulate matter, for example of a powder bed. Some of these applications may achieve consolidation of the particulate matter by sintering, using for example high speed sintering or selective laser sintering techniques. The specific mechanism of consolidation however is not limited to sintering, and may more generally represent fusing or melting or the like, including binding or gluing of particulate matter, or the application of a solvent to consolidate particulate matter.

Some sintering applications may achieve consolidation of the particulate matter by selective laser sintering. In selective laser sintering processes, a three-dimensional object is formed layer by layer by successive application of a fresh powder layer, followed by consolidating the powder using laser radiation over specific locations of the build bed surface, for example describing a cross section or 'slice' of the object for that particular layer. The melting temperature of a homogeneous powder of for example metal or polymer, or polymer coated metal core, is generally well defined, and control of the temperature difference between powder layer and melting temperature is critical.

In high speed sintering, infrared radiation is typically used to consolidate or 'sinter' powder. Whereas beam control of the laser in laser sintering applications provides definition to create the consolidated slice of the object, in high speed sintering the definition is achieved by first digitally printing an infrared absorber material onto a fresh powder layer. When the powder layer is subsequently irradiated by infrared radiation, only the printed areas absorb a significant amount of radiation to be sintered. Similarly to laser sintering, control of the temperature difference between powder layer and sintering temperature is critical.

The particulate matter may be any matter that can be spread in layers and successively consolidated to form a three-dimensional object. The particulate matter may be a polymer powder, or a polymer coated metal, or a metal, for example. The mechanism of consolidation may be achieved by sintering, melting or fusing with or without the use of absorber.

**In** apparatus for such processes, the desired temperature may be 50°C or less lower than a sintering temperature for the particulate matter.

The heating elements may take the form of ceramic heaters, however this is not essential. **In** other implementations, they may take the form of lamps, for example Heraeus lamps. One advantage of using lamps instead of ceramic heaters is that lamps have a much reduced time constant, and respond quicker to changes, for example during start-up or during operation of the printer where changes in duty cycle may be required. A ceramic heater may take up to an hour to reach a steady state, so that the apparatus requires a significant start up time. By comparison, lamps reach the steady state over a duration that is two magnitudes shorter. In addition, their infrared spectrum may be varied. A drawback may be that the lamp lifetime is shorter compared to the ceramic element, and the glass crystal window of the lamps will likely require cleaning to ensure a reliable process.

The build bed surface of the apparatus for the formation of three-dimensional objects may have a primary axis and a secondary axis. The primary axis may be longer than the secondary axis, such that the build bed surface has a generally rectangular shape; or the primary axis and secondary axis may be of the same length, such that the build bed surface has a generally square shape. Additionally, in some processes it may be advantageous that the radiative heating elements (which may be bare and/or shrouded heating elements) are arranged in a pattern that is symmetric about said primary axis and/or said secondary axis in order to achieve uniform control of the temperature profile at the build bed surface. Additionally, shrouded radiative heating elements may be arranged in one or more sub-groups, and the shrouded radiative heating elements in each sub-group may each be provided with a shroud of a design specific to the sub-group in question.

Furthermore, the shrouded heating elements in each sub-group may be arranged in a pattern that is symmetric about the primary build bed axis and/or said secondary build bed axis.

In other implementations, the build bed surface may be of a circular shape or in the form of a segment of a circle. The heater arrangement may be optimised so as to provide a uniform temperature profile across the build bed surface. The heater arrangement area, which is defined by the extent of the cover of the heating elements, may have the same or similar shape as the build bed surface; additionally it may be larger and arranged concentrically above the build bed surface, although this is not essential. For example, depending on the design of shrouded heating elements that may be comprised within the arrangement, the shape of the arrangement may be different to the shape of the build bed surface, and/or it may not be concentrically arranged above it.

The apparatus may further comprise a deposition sled, which is located within the working space adjacent the build bed surface, and which is operable to move over the build bed while spreading particulate matter across it.

In the case of high speed sintering, the apparatus may also comprise a printing sled, which is located within said working space adjacent the build bed surface, and which comprises one or more droplet deposition heads. The droplet deposition heads are configured to deposit droplets of a radiation-absorbing liquid in a desired pattern on particulate matter at the build bed surface, portions of the particulate matter thereafter being consolidated so as to form a layer of the object, the layer having a shape determined by the pattern of liquid.

### The meaning of 'optimised arrangement'

It should be noted that any reference to 'optimised' arrangements of heating elements, whether bare or shrouded, does not refer to arrangements that provides the best temperature profile compared to the desired profile. Instead, optimised arrangements provide a profile that is generally better than that from a starting matrix of heating elements, for example the matrix of bare heating elements shielded by a common protective shroud. The optimised arrangements may be arrived at by trial and error, or by using common problem solving methods that provide an improvement in performance over a previous arrangement for which the temperature profile was not uniform enough to be suitable for a reliable build process yielding a quality object.

The optimised arrangements may achieve a more uniform temperature profile across the build bed surface at the outset, and/or they may take into account specific heating effects during the build of the object, such as local effects due to the object's thermal mass within the build bed over the duration of the build process. Any dynamic heating effects during real time operation may be addressed by responsively optimising the duty cycle for each heating element.

While optimised arrangements have been illustrated in terms of properties of position and R value for each heating element, any one or more of the properties that affect the temperature profile due to a heating element at the build bed surface may be considered.

## Claims

1. Apparatus (1) for layer-by-layer formation of a three-dimensional object by the consolidation of particulate matter, the apparatus comprising:
a working space (4) having opposing bottom and top sides;
a build bed surface (12) on said bottom side of the working space (4) and upon which successive layers of said object are formed, the build bed surface (12) comprising a printable area (14); and
a heater arrangement area on said top side of the working space (4) and comprising a plurality of spaced-apart bare radiative heating elements (200) arranged on said top side of the working space (4), the bare radiative heating elements (200) being operable to heat particulate matter at the build bed surface (12) to a desired temperature profile;
wherein said plurality of spaced-apart bare radiative heating elements (200) comprises four or more spaced-apart bare radiative heating elements (200);
wherein, as viewed from said top side of the working space (4), said four or more spaced-apart bare radiative heating elements (200) are comprised within a first group of spaced-apart radiative heating elements (200) arranged beyond and around the perimeter (17) of the build bed surface (12) and within the heater arrangement area;
**characterised in that** the apparatus further comprises one or more shrouded radiative heating elements (200) operable to heat particulate matter at the build bed surface (12) to a desired temperature profile, each shrouded radiative heating element (200) being provided with a respective radiation-absorbing shroud (220); and
wherein each radiation-absorbing shroud (220) is arranged between the corresponding shrouded radiative heating element (200) and the build bed surface (12), and comprises one or more radiation-absorbing passages (222) defined by interior walls having infrared-absorbing surfaces for restricting the solid angle over which the corresponding shrouded radiative heating element (200) emits radiation, each radiation-absorbing passage (222) having opposing first and second ends, and arranged such that the first end faces one of said shrouded radiative heating elements (200), and such that the second end opens to the exterior so as to face the build bed surface (12).

2. The apparatus according to claim 1, wherein one or more of the shrouded radiative heating elements (200) is a member of said first group.

3. The apparatus according to claim 1 or claim 2, wherein two or more of the shrouded radiative heating elements (200) form at least one subgroup of shrouded radiative heating elements (200) and, for each subgroup, the shrouded radiative heating elements (200) are each provided with a radiation-absorbing shroud (220) of a design specific to the respective subgroup.

4. The apparatus according to any one of claims 1 to 3, wherein at least one of said radiation-absorbing shrouds (220) is formed as a mesh comprising an array of two or more radiation-absorbing passages (222).

5. The apparatus according to any preceding claim, wherein the build bed surface (12) is of a rectangular shape bounded by a first pair of parallel sides and a second pair of parallel sides, the second pair of parallel sides being perpendicular to the first pair of parallel sides;
wherein said radiative heating elements (200) are arranged in a pattern that, in a projective view, is symmetric about the centre of the build bed surface (12); and
wherein said four or more spaced-apart bare radiative heating elements (200) are arranged, in a projective view, along portions of each of the second pair of parallel sides.

6. The apparatus according to claim 3, wherein the build bed surface (12) is of a rectangular shape bounded by a first pair of parallel sides and a second pair of parallel sides, the second pair of parallel sides being perpendicular to the first pair of parallel sides;
wherein at least a first subgroup of shrouded radiative heating elements (200) is comprised within the first group of spaced-apart radiative heating elements (200);
wherein said bare radiative heating elements (200) are arranged in a pattern that, in a projective view, is symmetric about the centre of the build bed surface (12); and
wherein, in a projective view, the first subgroup of shrouded radiative heating elements (200) is arranged within and near the corners of the build bed surface (12).

7. The apparatus according to claim 3, wherein the build bed surface (12) is of a rectangular shape bounded by a first pair of parallel sides and a second pair of parallel sides, the second pair of parallel sides being perpendicular to the first pair of parallel sides;
wherein at least a first subgroup of shrouded radiative heating elements (200) is comprised within the first group of spaced-apart radiative heating elements (200);
wherein said bare radiative heating elements (200) are arranged in a pattern that, in a projective view, is symmetric about the centre of the build bed surface (12); and
wherein the first subgroup of shrouded radiative heating elements (200) is arranged along the first pair of parallel sides.

8. The apparatus according to claim 6, wherein said shrouded radiative heating elements (200) of the first subgroup are arranged in a pattern that, in a projective view, is symmetric about the centre of the build bed surface (12);
wherein, in a projective view, said shrouded radiative heating elements (200a) of the first subgroup are arranged within and near the corners of the build bed surface (12); and
wherein the bare radiative heating elements (200b) of the first group are arranged along portions of each of the second pair of parallel sides and along portions of each of the first pair of parallel sides.

9. The apparatus according to claim 1, wherein the plurality of radiative heating elements further comprises a second group of radiative heating elements (200) arranged across the perimeter (17) of the build bed surface (12) and beyond and around the perimeter of the printable area (14), wherein at least one of the first group and the second group consists of bare radiative heating elements.

10. The apparatus according to claim 8, wherein the first group comprises eight bare radiative heating elements (200b), wherein two bare radiative heating elements (200b) are arranged along portions of each of the first pair of parallel sides, and at least two bare radiative heating elements (200b) are arranged along portions of each of the second pair of parallel sides.

11. The apparatus according to claim 10, further comprising a further group of bare spaced-apart radiative heating elements (200c) arranged within the perimeter of the printable area (14), wherein the printable area (14) is comprised within the build bed surface (12).

12. The apparatus according to any one of claims 2 to 4, wherein the first group comprises the or a first subgroup and a second subgroup of four shrouded heating elements each;
wherein the build bed surface (12) is of a rectangular shape bounded by a first pair of parallel sides and a second pair of parallel sides, the second pair of parallel sides being perpendicular to the first pair of parallel sides, and
wherein said four or more spaced-apart bare radiative heating elements (200) of the first group are arranged in a pattern that, in a projective view, is symmetric about the centre of the build bed surface (12);
wherein said four or more spaced-apart bare radiative heating elements (200) of the first group are arranged each within and near the inner corners of the heater arrangement area, and
wherein two each of said shrouded radiative heating elements (200f) of the first subgroup are arranged along portions of each of the first pair of parallel sides and two each of said shrouded radiative heating elements (200e) of the second subgroup are arranged along portions of each of the second pair of parallel sides.

13. The apparatus of claim 6, wherein, as viewed from said top side of the working space,
two each of said four bare radiative heating elements (200h) of the first group are arranged along portions of each of the second pair of parallel sides of the heater arrangement area; and
wherein the first subgroup further comprises four shrouded heating elements (200g) of which two each are arranged along portions of each of the first pair of parallel sides.

14. The apparatus according to any one of claim **1,** claim 8, claim 12 or claim 13, further comprising a second group of bare spaced-apart and/or shrouded radiative heating elements (200) arranged beyond and around the perimeter of the printable area (14) and across the perimeter (17) of the build bed surface (12), wherein the printable area (14) is comprised within the build bed surface (12).

15. The apparatus of claim 14 when dependent on claim 13, wherein the second group consists of four bare radiative heating elements (200i) of which two each are arranged along portions of each of the first pair of parallel sides of the heater arrangement area.

## Patentansprüche

1. Vorrichtung (1) zur schichtweisen Bildung eines dreidimensionalen Objekts durch Festigung eines partikelförmigen Materials, wobei die Vorrichtung umfasst:
einen Arbeitsraum (4) mit einer unteren und einer oberen Seite, die einander gegenüberliegen;
eine Baubettoberfläche (12) auf der unteren Seite des Arbeitsraums (4), auf der aufeinanderfolgende Schichten des Objekts gebildet werden, wobei die Baubettoberfläche (12) einen bedruckbaren Bereich (14) umfasst; und
einen Heizungsanordnungsbereich auf der oberen Seite des Arbeitsraums (4), der eine Vielzahl von voneinander beabstandeten unabgeschirmten Strahlungsheizelementen (200) umfasst, die auf der oberen Seite des Arbeitsraums (4) angeordnet sind, wobei die unabgeschirmten Strahlungsheizelemente (200) betreibbar sind, um Partikelmaterial auf der Baubettoberfläche (12) auf ein gewünschtes Temperaturprofil zu erwärmen;
wobei die Vielzahl von voneinander beabstandeten unabgeschirmten Strahlungsheizelementen (200) vier oder mehr voneinander beabstandete unabgeschirmte Strahlungsheizelemente (200) umfasst;
wobei, von der oberen Seite des Arbeitsraums (4) aus gesehen, die vier oder mehr voneinander beabstandeten unabgeschirmten Strahlungsheizelemente (200) in einer ersten Gruppe von voneinander beabstandeten Strahlungsheizelementen (200), die außerhalb und um den Umfang (17) der Baubettoberfläche (12) herum und innerhalb des Heizanordnungsbereichs angeordnet sind, enthalten sind;
**dadurch gekennzeichnet, dass**
die Vorrichtung ferner ein oder mehrere abgeschirmte Strahlungsheizelemente (200) umfasst, die dazu dienen, Partikelmaterial auf der Baubettoberfläche (12) auf ein gewünschtes Temperaturprofil zu erwärmen, wobei jedes abgeschirmte Strahlungsheizelement (200) mit einer jeweiligen strahlungsabsorbierenden Abschirmung (220) ausgestattet ist; und
wobei jede strahlungsabsorbierende Abschirmung (220) zwischen dem jeweiligen abgeschirmten Strahlungsheizelement (200) und der Baubettoberfläche (12) angeordnet ist und einen oder mehrere strahlungsabsorbierende Durchgänge (222) umfasst, die durch Innenwände mit infrarotabsorbierenden Oberflächen definiert sind, um den Raumwinkel zu begrenzen, über den das jeweilige abgeschirmte Strahlungsheizelement (200) Strahlung emittiert, wobei jeder strahlungsabsorbierende Durchgang (222) einander gegenüberliegende erste und zweite Enden aufweist und so angeordnet ist, dass das erste Ende einem der abgeschirmten Strahlungsheizelemente (200) zugewandt ist und das zweite Ende nach außen offen ist, so dass es der Baubettoberfläche (12) zugewandt ist.

2. Vorrichtung nach Anspruch 1, wobei eines oder mehrere der abgeschirmten Strahlungsheizelemente (200) der ersten Gruppe angehöhren.

3. Vorrichtung nach Anspruch 1 oder Anspruch 2, wobei zwei oder mehr der abgeschirmten Strahlungsheizelemente (200) mindestens eine Untergruppe von abgeschirmten Strahlungsheizelementen (200) bilden und für jede Untergruppe die abgeschirmten Strahlungsheizelemente (200) jeweils mit einer strahlungsabsorbierenden Abschirmung (220) ausgestattet sind, deren Ausführung für die jeweilige Untergruppe spezifisch ist.

4. Vorrichtung nach einem der Ansprüche 1 bis 3, wobei mindestens eine der strahlungsabsorbierenden Abschirmungen (220) als ein Gitter ausgebildet ist, das ein Array von zwei oder mehr strahlungsabsorbierenden Durchgängen (222) umfasst.

5. Vorrichtung nach einem der vorstehenden Ansprüche, wobei die Baubettoberfläche (12) eine rechteckige Form aufweist, die durch ein erstes Paar paralleler Seiten und ein zweites Paar paralleler Seiten begrenzt ist, wobei das zweite Paar paralleler Seiten senkrecht zum ersten Paar paralleler Seiten steht;
wobei die Strahlungsheizelemente (200) in einem Muster angeordnet sind, das in einer Projektionsansicht symmetrisch um die Mitte der Baubettoberfläche (12) ist; und
wobei in einer Projektionsansicht die vier oder mehr voneinander beabstandeten unabgeschirmten Strahlungsheizelemente (200) entlang Abschnitten jeder des zweiten Paares paralleler Seiten angeordnet sind.

6. Vorrichtung nach Anspruch 3, wobei die Baubettoberfläche (12) eine rechteckige Form aufweist, die durch ein erstes Paar paralleler Seiten und ein zweites Paar paralleler Seiten begrenzt ist, wobei das zweite Paar paralleler Seiten senkrecht zum ersten Paar paralleler Seiten steht;
wobei mindestens eine erste Untergruppe von abgeschirmten Strahlungsheizelementen (200) innerhalb der ersten Gruppe von voneinander beabstandeten Strahlungsheizelementen (200) enthalten ist;
wobei die unabgeschirmten Strahlungsheizelemente (200) in einem Muster angeordnet sind, das in einer Projektionsansicht symmetrisch um die Mitte der Baubettoberfläche (12) ist; und
wobei in einer Projektionsansicht die erste Untergruppe von abgeschirmten Strahlungsheizelementen (200) innerhalb und in der Nähe der Ecken der Baubettoberfläche (12) angeordnet ist.

7. Vorrichtung nach Anspruch 3, wobei die Baubettoberfläche (12) eine rechteckige Form aufweist, die durch ein erstes Paar paralleler Seiten und ein zweites Paar paralleler Seiten begrenzt ist, wobei das zweite Paar paralleler Seiten senkrecht zum ersten Paar paralleler Seiten steht;
wobei mindestens eine erste Untergruppe von abgeschirmten Strahlungsheizelementen (200) innerhalb der ersten Gruppe von voneinander beabstandeten Strahlungsheizelementen (200) enthalten ist;
wobei die unabgeschirmten Strahlungsheizelemente (200) in einem Muster angeordnet sind, das in einer Projektionsansicht symmetrisch um die Mitte der Baubettoberfläche (12) ist; und
wobei die erste Untergruppe von abgeschirmten Strahlungsheizelementen (200) entlang des ersten Paares paralleler Seiten angeordnet ist.

8. Vorrichtung nach Anspruch 6, wobei die abgeschirmten Strahlungsheizelemente (200) der ersten Untergruppe in einem Muster angeordnet sind, das in einer Projektionsansicht symmetrisch um die Mitte der Baubettoberfläche (12) ist;
wobei in einer projektiven Ansicht die abgeschirmten Strahlungsheizelemente (200a) der ersten Untergruppe innerhalb und in der Nähe der Ecken der Baubettoberfläche (12) angeordnet sind; und
wobei die unabgeschirmten Strahlungsheizelemente (200b) der ersten Gruppe entlang Abschnitten jeder des zweiten Paares paralleler Seiten und entlang Abschnitten jeder der ersten Paare paralleler Seiten angeordnet sind.

9. Vorrichtung nach Anspruch 1, wobei die Vielzahl von Strahlungsheizelementen ferner eine zweite Gruppe von Strahlungsheizelementen (200) umfasst, die über den Umfang (17) der Baubettoberfläche (12) und herüber sowie über den Umfang des bedruckbaren Bereichs (14) hinaus und um diesen herum angeordnet sind, wobei mindestens eine der ersten Gruppe und der zweiten Gruppe aus unabgeschirmten Strahlungsheizelementen besteht.

10. Vorrichtung nach Anspruch 8, wobei die erste Gruppe acht unabgeschirmte Strahlungsheizelemente (200b) umfasst, wobei zwei unabgeschirmte Strahlungsheizelemente (200b) entlang Abschnitten jedes ersten Paares paralleler Seiten angeordnet sind und mindestens zwei unabgeschirmte Strahlungsheizelemente (200b) entlang Abschnitten jeder des zweiten Paares paralleler Seiten angeordnet sind.

11. Vorrichtung nach Anspruch 10, die ferner eine weitere Gruppe von unabgeschirmten, voneinander beabstandeten Strahlungsheizelementen (200c) umfasst, die innerhalb des Umfangs des bedruckbaren Bereichs (14) angeordnet sind, wobei der bedruckbare Bereich (14) innerhalb der Baubettoberfläche (12) liegt.

12. Vorrichtung nach einem der Ansprüche 2 bis 4, wobei die erste Gruppe die oder eine erste Untergruppe und eine zweite Untergruppe von jeweils vier abgeschirmten Heizelementen umfasst;
wobei die Baubettoberfläche (12) eine rechteckige Form aufweist, die durch ein erstes Paar paralleler Seiten und ein zweites Paar paralleler Seiten begrenzt ist, wobei das zweite Paar paralleler Seiten senkrecht zum ersten Paar paralleler Seiten steht, und
wobei die vier oder mehr voneinander beabstandeten unabgeschirmten Strahlungsheizelemente (200) der ersten Gruppe in einem Muster angeordnet sind, das in einer Projektionsansicht symmetrisch um die Mitte der Baubettoberfläche (12) ist;
wobei die vier oder mehr voneinander beabstandeten unabgeschirmten Strahlungsheizelemente (200) der ersten Gruppe jeweils innerhalb und in der Nähe der inneren Ecken des Heizungsanordnungsbereichs angeordnet sind, und
wobei jeweils zwei der abgeschirmten Strahlungsheizelemente (200f) der ersten Untergruppe entlang Abschnitten jeder des ersten Paares paralleler Seiten und jeweils zwei der abgeschirmten Strahlungsheizelemente (200e) der zweiten Untergruppe entlang Abschnitten jeder des zweiten Paares paralleler Seiten angeordnet sind.

13. Vorrichtung nach Anspruch 6, wobei, von der oeberen Seite des Arbeitsraums aus gesehen,
jeweils zwei der vier unabgeschirmten Strahlungsheizelemente (200h) der ersten Gruppe entlang Abschnitten jeder des zweiten Paares paralleler Seiten des Heizanordnungsbereichs angeordnet sind; und
wobei die erste Untergruppe ferner vier abgeschirmte Heizelemente (200g) umfasst, von denen jeweils zwei entlang Abschnitten jeder des ersten Paares paralleler Seiten angeordnet sind.

14. Vorrichtung nach einem der Ansprüche 1, 8, 12 oder 13, die ferner eine zweite Gruppe von unabgeschirmten, voneinander beabstandeten und/oder abgeschirmten Strahlungsheizelementen (200) umfasst, die außerhalb und um den Umfang des bedruckbaren Bereichs (14) herum sowie über den Umfang (17) der Baubettoberfläche (12) angeordnet sind, wobei der bedruckbare Bereich (14) innerhalb der Baubettoberfläche (12) liegt.

15. Die Vorrichtung nach Anspruch 14, abhängig von Anspruch 13, wobei die zweite Gruppe aus vier unabgeschirmten Strahlungsheizelementen (200i) besteht, von denen jeweils zwei entlang Abschnitten jeder des ersten Paares paralleler Seiten des Heizungsanordnungsbereichs angeordnet sind.

## Revendications

1. Appareil (1) de formation par couches d'un objet tridimensionnel par la consolidation de matériau particulaire, l'appareil comprenant :
un espace de travail (4) ayant des côtés inférieur et supérieur opposés ;
une surface de lit de construction (12) sur ledit côté inférieur de l'espace de travail (4) et sur laquelle des couches successives dudit objet sont formées, la surface de lit de construction (12) comprenant une zone imprimable (14) ; et
une zone d'agencement de dispositif de chauffage sur ledit côté supérieur de l'espace de travail (4) et comprenant une pluralité d'éléments chauffants rayonnants nus espacés les uns des autres (200) agencés sur ledit côté supérieur de l'espace de travail (4), les éléments chauffants rayonnants nus (200) étant capables de fonctionner pour chauffer le matériau particulaire au niveau de la surface de lit de construction (12) à un profil de température souhaité ;
dans lequel ladite pluralité d'éléments chauffants rayonnants nus espacés les uns des autres (200) comprend quatre éléments chauffants rayonnants nus espacés les uns des autres (200) ou plus ;
dans lequel, vus depuis ledit côté supérieur de l'espace de travail (4), lesdits quatre éléments chauffants rayonnants nus espacés les uns des autres (200) ou plus sont compris dans un premier groupe d'éléments chauffants rayonnants espacés les uns des autres (200) agencés au-delà et autour du périmètre (17) de la surface de lit de construction (12) et dans les limites de la zone d'agencement de dispositif de chauffage ;
**caractérisé en ce que** l'appareil comprend en outre un ou plusieurs éléments chauffants rayonnants pourvus d'un bouclier (200) capables de fonctionner pour chauffer le matériau particulaire au niveau de la surface de lit de construction (12) à un profil de température souhaité, chaque élément chauffant rayonnant pourvu d'un bouclier (200) étant muni d'un bouclier absorbant les rayonnements respectif (220) ; et
dans lequel chaque bouclier absorbant les rayonnements (220) est agencé entre l'élément chauffant rayonnant pourvu d'un bouclier correspondant (200) et la surface de lit de construction (12), et comprend un ou plusieurs passages absorbant les rayonnements (222) définis par des parois intérieures ayant des surfaces absorbant les infrarouges pour restreindre l'angle solide sur lequel l'élément chauffant rayonnant pourvu d'un bouclier correspondant (200) émet un rayonnement, chaque passage absorbant les rayonnements (222) ayant des premières et deuxièmes extrémités opposées, et agencées de sorte que la première extrémité est en face de l'un desdits éléments chauffants rayonnants pourvus d'un bouclier (200), et de sorte que la deuxième extrémité s'ouvre vers l'extérieur de manière à faire face à la surface de lit de construction (12).

2. Appareil selon la revendication 1, dans lequel un ou plusieurs des éléments chauffants rayonnants pourvus d'un bouclier (200) sont membres dudit premier groupe.

3. Appareil selon la revendication 1 ou la revendication 2, dans lequel deux des éléments chauffants rayonnants pourvus d'un bouclier (200) ou plus forment au moins un sous-groupe d'éléments chauffants rayonnants pourvus d'un bouclier (200) et, pour chaque sous-groupe, les éléments chauffants rayonnants pourvus d'un bouclier (200) sont chacun munis d'un bouclier absorbant les rayonnements (220) d'une conception propre au sous-groupe respectif.

4. Appareil selon l'une quelconque des revendications 1 à 3, dans lequel au moins l'un desdits boucliers absorbant les rayonnements (220) est formé comme une maille comprenant un réseau de deux passages absorbant les rayonnements (222) ou plus.

5. Appareil selon l'une quelconque des revendications précédentes, dans lequel la surface de lit de construction (12) a une forme rectangulaire bornée par une première paire de côtés parallèles et une deuxième paire de côtés parallèles, la deuxième paire de côtés parallèles étant perpendiculaire à la première paire de côtés parallèles ;
dans lequel lesdits éléments chauffants rayonnants (200) sont agencés selon un motif qui, dans une vue projective, est symétrique autour du centre de la surface de lit de construction (12) ; et
dans lequel lesdits quatre éléments chauffants rayonnants nus espacés les uns des autres (200) ou plus sont agencés, dans une vue projective, le long de parties de chacun de la deuxième paire de côtés parallèles.

6. Appareil selon la revendication 3, dans lequel la surface de lit de construction (12) a une forme rectangulaire bornée par une première paire de côtés parallèles et une deuxième paire de côtés parallèles, la deuxième paire de côtés parallèles étant perpendiculaire à la première paire de côtés parallèles ;
dans lequel au moins un premier sous-groupe d'éléments chauffants rayonnants pourvus d'un bouclier (200) est compris dans le premier groupe d'éléments chauffants rayonnants espacés les uns des autres (200) ;
dans lequel lesdits éléments chauffants rayonnants nus (200) sont agencés selon un motif qui, dans une vue projective, est symétrique autour du centre de la surface de lit de construction (12) ; et
dans lequel, dans une vue projective, le premier sous-groupe d'éléments chauffants rayonnants pourvus d'un bouclier (200) est agencé dans les limites et à proximité des coins de la surface de lit de construction (12).

7. Appareil selon la revendication 3, dans lequel la surface de lit de construction (12) a une forme rectangulaire bornée par une première paire de côtés parallèles et une deuxième paire de côtés parallèles, la deuxième paire de côtés parallèles étant perpendiculaire à la première paire de côtés parallèles ;
dans lequel au moins un premier sous-groupe d'éléments chauffants rayonnants pourvus d'un bouclier (200) est compris dans le premier groupe d'éléments chauffants rayonnants espacés les uns des autres (200) ;
dans lequel lesdits éléments chauffants rayonnants nus (200) sont agencés selon un motif qui, dans une vue projective, est symétrique autour du centre de la surface de lit de construction (12) ; et
dans lequel le premier sous-groupe d'éléments chauffants rayonnants pourvus d'un bouclier (200) est agencé le long de la première paire de côtés parallèles.

8. Appareil selon la revendication 6, dans lequel lesdits éléments chauffants rayonnants pourvus d'un bouclier (200) du premier sous-groupe sont agencés selon un motif qui, dans une vue projective, est symétrique autour du centre de la surface de lit de construction (12) ;
dans lequel, dans une vue projective, lesdits éléments chauffants rayonnants pourvus d'un bouclier (200a) du premier sous-groupe sont agencés dans les limites et à proximité des coins de la surface de lit de construction (12) ; et
dans lequel les éléments chauffants rayonnants nus (200b) du premier groupe sont agencés le long de parties de chacun de la deuxième paire de côtés parallèles et le long de parties de chacun de la première paire de côtés parallèles.

9. Appareil selon la revendication 1, dans lequel la pluralité d'éléments chauffants rayonnants comprend en outre un deuxième groupe d'éléments chauffants rayonnants (200) agencés sur le périmètre (17) de la surface de lit de construction (12) et au-delà et autour du périmètre de la zone imprimable (14), dans lequel au moins l'un du premier groupe et du deuxième groupe est constitué par des éléments chauffants rayonnants nus.

10. Appareil selon la revendication 8, dans lequel le premier groupe comprend huit éléments chauffants rayonnants nus (200b), dans lequel deux éléments chauffants rayonnants nus (200b) sont agencés le long de parties de chacun de la première paire de côtés parallèles, et au moins deux éléments chauffants rayonnants nus (200b) sont agencés le long de parties de chacun de la deuxième paire de côtés parallèles.

11. Appareil selon la revendication 10, comprenant en outre un groupe supplémentaire d'éléments chauffants rayonnants espacés les uns des autres nus (200c) agencés dans les limites du périmètre de la zone imprimable (14), dans lequel la zone imprimable (14) est comprise dans les limites de la surface de lit de construction (12).

12. Appareil selon l'une quelconque des revendications 2 à 4, dans lequel le premier groupe comprend le ou un premier sous-groupe et un deuxième sous-groupe de quatre éléments chauffants pourvus d'un bouclier chacun ;
dans lequel la surface de lit de construction (12) a une forme rectangulaire bornée par une première paire de côtés parallèles et une deuxième paire de côtés parallèles, la deuxième paire de côtés parallèles étant perpendiculaire à la première paire de côtés parallèles, et
dans lequel lesdits quatre éléments chauffants rayonnants nus espacés les uns des autres (200) ou plus du premier groupe sont agencés selon un motif qui, dans une vue projective, est symétrique autour du centre de la surface de lit de construction (12) ;
dans lequel lesdits quatre éléments chauffants rayonnants nus espacés les uns des autres (200) ou plus du premier groupe sont agencés chacun dans les limites et à proximité des coins internes de la zone d'agencement d'élément chauffant, et
dans lequel deux chacun desdits éléments chauffants rayonnants pourvus d'un bouclier (200f) du premier sous-groupe sont agencés le long de parties de chacun de la première paire de côtés parallèles et deux chacun desdits éléments chauffants rayonnants pourvus d'un bouclier (200e) du deuxième sous-groupe sont agencés le long de parties de chacun de la deuxième paire de côtés parallèles.

13. Appareil selon la revendication 6, dans lequel, vus dudit côté supérieur de l'espace de travail,
deux chacun desdits quatre éléments chauffants rayonnants nus (200h) du premier groupe sont agencés le long de parties de chacun de la deuxième paire de côtés parallèles de la zone d'agencement de dispositif de chauffage ; et
dans lequel le premier sous-groupe comprend en outre quatre éléments chauffants pourvus d'un bouclier (200g) dont deux sont chacun agencés le long de parties de chacun de la première paire de côtés parallèles.

14. Appareil selon l'une quelconque de la revendication 1, de la revendication 8, de la revendication 12 ou de la revendication 13, comprenant en outre un deuxième groupe d'éléments chauffants rayonnants nus pourvus d'un bouclier et/ou espacés les uns des autres (200) agencés au-delà et autour du périmètre de la zone imprimable (14) et sur le périmètre (17) de la surface de lit de construction (12), dans lequel la zone imprimable (14) est comprise dans les limites de la surface de lit de construction (12).

15. Appareil selon la revendication 14 lorsqu'elle dépend de la revendication 13, dans lequel le deuxième groupe est constitué par quatre éléments chauffants rayonnants nus (200i) dont deux sont chacun agencés le long de parties de chacun de la première paire de côtés parallèles de la zone d'agencement de dispositif de chauffage.
